(19) Europäisches Patentamt
European Patent Office
Office européen des brevets

(11) **EP 4 009 718 A1**

(12) **EUROPEAN PATENT APPLICATION**
published in accordance with Art. 153(4) EPC

(43) Date of publication:
08.06.2022 Bulletin 2022/23

(21) Application number: 20852676.4

(22) Date of filing: 11.05.2020

(51) International Patent Classification (IPC):
*H04W 56/00* (2009.01)

(52) Cooperative Patent Classification (CPC):
H04B 7/185; H04L 5/00; H04W 56/00; H04W 84/06

(86) International application number:
PCT/CN2020/089682

(87) International publication number:
WO 2021/027346 (18.02.2021 Gazette 2021/07)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 12.08.2019 CN 201910741570

(71) Applicant: HUAWEI TECHNOLOGIES CO., LTD.
Shenzhen Guangdong 518129 (CN)

(72) Inventors:
• XU, Chenlei
  Shenzhen, Guangdong 518129 (CN)
• LUO, Hejia
  Shenzhen, Guangdong 518129 (CN)
• ZHOU, Jianwei
  Shenzhen, Guangdong 518129 (CN)
• WANG, Xiaolu
  Shenzhen, Guangdong 518129 (CN)

(74) Representative: Isarpatent
Patent- und Rechtsanwälte Barth
Charles Hassa Peckmann & Partner mbB
Friedrichstrasse 31
80801 München (DE)

(54) **COMMON TIMING ADVANCE INDICATION METHOD AND APPARATUS, DEVICE, AND STORAGE MEDIUM**

(57) Embodiments of this application provide a common timing advance indication method, an apparatus, a device, and a storage medium. The method includes: A terminal receives first indication information from a network device, where the first indication information is used to indicate a common timing advance TA value in a satellite communications system; and the terminal determines the common TA value based on the first indication information, where the common TA value is used to represent a round-trip transmission delay between a reference point in a satellite coverage area and the network device. In this application, the terminal receives, from the network device, the indication information used to indicate the common timing advance TA value in the satellite communications system, and determines the common TA value based on the indication information. Because signaling overheads required by the indication information are relatively small in comparison with signaling overheads required by the common TA value, signaling overheads for indicating the common TA value by the network device are reduced.

A terminal receives first indication information from a network device, where the first indication information is used to indicate a common timing advance TA value in a satellite communications system — S501

The terminal determines the common TA value based on the first indication information, where the common TA value is used to represent a round-trip transmission delay between a reference point in a satellite coverage area and the network device — S502

FIG. 5

EP 4 009 718 A1

**Description**

This application claims priority to Chinese Patent Application No. 2019107415709, filed with the China National Intellectual Property Administration on August 12, 2019 and entitled "COMMON TIMING ADVANCE INDICATION METHOD, APPARATUS, DEVICE, AND STORAGE MEDIUM", which is incorporated herein by reference in its entirety.

**TECHNICAL FIELD**

This application relates to the field of communications technologies, and in particular, to a common timing advance indication method, an apparatus, a device, and a storage medium.

**BACKGROUND**

In comparison with a terrestrial communications system, a current satellite communications system has such advantages as a long communications distance, a large coverage area, and a wide communications frequency band, and being capable of providing communications services for users anytime and anywhere. Therefore, application prospects of the satellite communications system are expanding.

In the terrestrial communications system, because there is a specific distance between a terminal and a network device, there is a specific delay before an uplink data frame sent by the terminal arrives at the network device. To maintain synchronization between the uplink data frame of the terminal and a downlink data frame of the network device, the network device needs to send a timing advance (Timing Advance, TA) value to the terminal, and the terminal sends uplink data based on the TA value. The TA value reflects a signal round-trip transmission delay between the terminal and the network device.

However, in the satellite communications system, because the terminal and the network device are far away from each other, the signal round-trip transmission delay between the terminal and the network device is high. As a result, signaling overheads required for feeding back the delay are high.

**SUMMARY**

This application provides a common timing advance indication method, an apparatus, a device, and a storage medium, to reduce signaling overheads for indicating a common TA value by a network device.

According to a first aspect, this application provides a common timing advance indication method. Specifically, a network device sends, to a terminal, first indication information used to indicate a common TA value. Correspondingly, the terminal receives the first indication information sent by the network device, and determines, based on the first indication information, the common TA value that is indicated by the network device and that is associated with a satellite coverage area in a satellite communications system. The common TA value is used to represent a round-trip transmission delay between a reference point in the satellite coverage area and the network device. Because the network device does not need to directly send the common TA value itself, and signaling overheads required by the indication information are small in comparison with signaling overheads required by the common TA value, signaling overheads for indicating the common TA value by the network device are reduced.

In a possible design, the first indication information includes index information of the common TA value. The terminal determines the common TA value based on the index information of the common TA value and a correspondence between an index information set and a common TA value set. The index information includes at least one of second indication information used to indicate a satellite orbital altitude, third indication information used to indicate a satellite communications system type, and fourth indication information used to indicate a satellite coverage area sequence number. Because a quantity of bits of an index number of the common TA value is much smaller than a quantity of bits of the common TA value, the overheads for indicating the common TA value can be effectively reduced. In addition, in the satellite communications system, before the terminal sends a random access preamble to the network device, the network device sends, to the terminal, the indication information used to indicate the common TA value, so that the terminal can use the common TA value as a transmission TA value for sending the random access preamble. Therefore, a problem that the random access preamble occupies a large quantity of resources and a problem that complexity of detecting the random access preamble by the network device is high are effectively resolved.

In a possible design, the first indication information includes index information of a scaling value of the common TA value. The terminal determines the scaling value of the common TA value based on the index information of the scaling value of the common TA value and a correspondence between an index information set and a common TA scaling value set; and further determines the common TA value based on the scaling value of the common TA value and a scaling coefficient of the common TA value.

In a possible design, the first indication information includes a scaling value of the common TA value. The terminal determines the common TA value based on the scaling value of the common TA value and a scaling coefficient of the common TA value. According to the solution provided in this embodiment, in comparison with direct sending of the common TA value, signaling overheads are reduced. In addition, the scaling value of the common TA value and the scaling coefficient of the common TA value may be indicated in a plurality of manners. The common TA value is more flexibly indicated, and signaling is more flexibly configured.

In a possible design, the first indication information further includes index information of a scaling coefficient of the common TA value. Before determining the common TA value based on a scaling value of the common TA value and the scaling coefficient of the common TA value, the terminal may further determine the scaling coefficient of the common TA value based on the index information of the scaling coefficient of the common TA value and a correspondence between an index information set and a scaling coefficient set.

In a possible design, the first indication information includes index information of a reference TA value corresponding to the common TA value. The terminal determines, based on the index information of the reference TA value corresponding to the common TA value and a correspondence between an index information set and a reference TA value set, the reference TA value corresponding to the common TA value; and further determines the common TA value based on at least one offset and the reference TA value corresponding to the common TA value. The common TA value is a sum of the at least one offset and the reference TA value corresponding to the common TA value.

In a possible design, the first indication information includes index information of a scaling value of a reference TA value corresponding to the common TA value. The terminal determines, based on the index information of the scaling value of the reference TA value corresponding to the common TA value and a correspondence between an index information set and a benchmark TA scaling value set, the scaling value of the reference TA value corresponding to the common TA value; further determines, based on the scaling value of the reference TA value corresponding to the common TA value and a scaling coefficient of the reference TA value corresponding to the common TA value, the reference TA value corresponding to the common TA value; and determines the common TA value based on at least one offset and the reference TA value corresponding to the common TA value. The common TA value is a sum of the at least one offset and the reference TA value corresponding to the common TA value.

In a possible design, the first indication information includes a scaling value of a reference TA value corresponding to the common TA value. The terminal determines, based on the scaling value of the reference TA value corresponding to the common TA value and a scaling coefficient of the reference TA value corresponding to the common TA value, the reference TA value corresponding to the common TA value; and further determines the common TA value based on at least one offset and the reference TA value corresponding to the common TA value. The common TA value is a sum of the at least one offset and the reference TA value corresponding to the common TA value. The common TA value is indicated by using the reference TA value and the at least one offset. This can not only improve indication precision for indicating the common TA value, but also further reduce bit overheads required for indication. In addition, the scaling coefficient of the reference TA value and/or a scaling coefficient of the at least one offset are/is introduced based on the reference TA value and the at least one offset, so that on the basis of ensuring the indication precision, signaling overheads can be further reduced, and the common TA value can be more flexibly indicated. In addition, different offsets use a same time unit or different time units, so that the network device only needs to indicate that an offset is several times a time unit. This enables the network device to minimize indication overheads for a total offset.

In a possible design, the first indication information further includes index information corresponding to the scaling coefficient of the reference TA value corresponding to the common TA value. Before determining, based on the scaling value of the reference TA value corresponding to the common TA value and the scaling coefficient of the reference TA value corresponding to the common TA value, the reference TA value corresponding to the common TA value, the terminal may further determine, based on the index information corresponding to the scaling coefficient of the reference TA value corresponding to the common TA value and a correspondence between an index information set and a scaling coefficient set, the scaling coefficient of the reference TA value corresponding to the common TA value.

In a possible design, the first indication information further includes the at least one offset.

In a possible design, the first indication information further includes index information of the at least one offset. Before determining the common TA value based on the at least one offset and the reference TA value corresponding to the common TA value, the terminal may further determine the at least one offset based on the index information of the at least one offset and a correspondence between an index information set and an offset set.

In a possible design, the first indication information further includes index information of a scaling value of the at least one offset. Before determining the common TA value based on at least one offset and the reference TA value corresponding to the common TA value, the terminal may further determine the scaling value of the at least one offset based on the index information of the scaling value of the at least one offset and a correspondence between an index information set and an offset scaling value set; and determine the at least one offset based on the scaling value of the at least one offset and a scaling coefficient of the at least one offset.

In a possible design, the first indication information further includes a scaling value of the at least one offset. Before determining the common TA value based on at least one offset and the reference TA value corresponding to the common TA value, the terminal may further determine the at least one offset based on the scaling value of the at least one offset and a scaling coefficient of the at least one offset.

In a possible design, the first indication information further includes index information of the scaling coefficient of the at least one offset. Before determining the at least one offset based on the scaling value of the at least one offset and a scaling coefficient of the at least one offset, the terminal may further determine the scaling coefficient of the at least one offset based on the index information of the scaling coefficient of the at least one offset and a correspondence between an index information set and a scaling coefficient set.

In a possible design, the index information includes at least one of second indication information used to indicate a satellite orbital altitude, third indication information used to indicate a satellite communications system type, and fourth indication information used to indicate a satellite coverage area sequence number.

In a possible design, the first indication information includes a differential TA value. Correspondingly, the terminal determines the common TA value based on the differential TA value and a benchmark TA value. The common TA value is a sum of the benchmark TA value and the differential TA value.

In a possible design, the first indication information includes a scaling value of a differential TA value. Correspondingly, the terminal determines the differential TA value based on the scaling value of the differential TA value and a scaling coefficient of the differential TA value. Further, the terminal determines the common TA value based on the differential TA value and a benchmark TA value. The common TA value is a sum of the benchmark TA value and the differential TA value.

In a possible design, the first indication information includes an index number of a differential TA value. Correspondingly, the terminal determines the differential TA value based on the index number of the differential TA value and a correspondence between an index information set and a differential TA value set. Further, the terminal determines the common TA value based on the differential TA value and a benchmark TA value. The common TA value is a sum of the benchmark TA value and the differential TA value.

In a possible design, the first indication information includes an index number of a scaling value of a differential TA value. Correspondingly, the terminal determines the scaling value of the differential TA value based on the index number of the scaling value of the differential TA value and a correspondence between an index information set and a scaling value set of the differential TA value; and determines the differential TA value based on the scaling value of the differential TA value and a scaling coefficient of the differential TA value. Further, the terminal determines the common TA value based on the differential TA value and a benchmark TA value. The common TA value is a sum of the benchmark TA value and the differential TA value.

In a possible design, the first indication information further includes the benchmark TA value.

In a possible design, the first indication information further includes an index number of the benchmark TA value.

In a possible design, the first indication information further includes a scaling value of the benchmark TA value.

In a possible design, the first indication information further includes an index number of a scaling value of the benchmark TA value.

In a possible design, the terminal receives signaling delivered by the network device. The terminal determines the common TA value or the reference TA value based on the signaling.

In a possible design, the signaling includes at least one of random access response window signaling and contention resolution timer signaling. The random access response window signaling includes an RAR window length, and the contention resolution timer signaling includes a contention resolution timer length. The RAR window length is related to the common TA value or the reference TA value, and the contention resolution timer length is related to the common TA value or the reference TA value.

In a possible design, the signaling includes at least one of a first delay offset 1 between a random access preamble and a start point of an RAR window, a second delay offset 2 between an L2/L3 message and a random access response, and a third delay offset 3 between a start moment of a contention resolution timer and an L2/L3 message. The offset 1, the offset 2, and the offset 3 are separately related to the common TA value or the reference TA value.

In a possible design, the signaling includes a transmission interval K1 between a PDSCH and a PUCCH, and/or a transmission interval K2 between a PDCCH and a PUSCH. K1 and K2 are separately related to the common TA value or the reference TA value.

In a possible design, the terminal receives a satellite-related specific parameter or a specific parameter, in the satellite communications system, sent by the network device. The terminal obtains, through calculation, the common TA value according to the specific parameter and a preset geometric formula or fitting formula.

In a possible design, the specific parameter includes the satellite orbital altitude and angle information in the satellite communications system. Correspondingly, the geometric formula is a functional relationship between the common TA value, the satellite orbital altitude, and the angle information.

In a possible design, the angle information in the satellite communications system includes at least one of an elevation angle, a half angle of beam divergence, and a geocentric angle.

In a possible design, the specific parameter includes a first angle, a second angle, and a third angle. The first angle is an included angle between a first plane and a satellite orbital plane. The first plane is a plane including the center of the Earth, a ground preset point, and a plane of a first point. The first point is a projected point of the ground preset point on a first arc, and the first arc is a projected line of a satellite orbit on the ground.

The second angle is an included angle between a first straight line and a second straight line. The first straight line passes through the center of the Earth and the ground preset point, and the second straight line passes through the center of the Earth and the first point.

The third angle is a geocentric angle, at a current moment, between a satellite and the first point.

In a possible design, the specific parameter includes a geocentric angle and a coefficient in the fitting formula. The fitting formula is a functional relationship between the common TA value and the coefficient.

Correspondingly, the geometric formula is a functional relationship between the common TA value, a first angle, a second angle, and a third angle. The first angle, the second angle, and the third angle are used to represent relative positions between a ground preset point and a satellite.

According to a second aspect, this application provides a common timing advance indication method. The method includes:

A network device generates first indication information.

The network device sends the first indication information. The first indication information is used to indicate a common timing advance TA value in a satellite communications system, and the common TA value is used to represent a round-trip transmission delay between a reference point in a satellite coverage area and the network device.

In a possible design, before the network device generates the first indication information, the method further includes: The network device obtains a correspondence between an index information set and a common TA value set. The first indication information includes index information of the common TA value.

In a possible design, before the network device generates the first indication information, the method further includes:

The network device generates a correspondence between an index information set and a reference TA value set.

The first indication information includes index information of a reference TA value corresponding to the common TA value, and the common TA value is a sum of at least one offset and the reference TA value corresponding to the common TA value.

In a possible design, before the network device generates the first indication information, the method further includes:

The network device obtains a correspondence between an index information set and an offset set.

The first indication information further includes index information of the at least one offset.

According to a third aspect, this application provides a communications apparatus, including a module, a component, or a circuit configured to implement the common timing advance indication method according to the first aspect or the second aspect.

According to a fourth aspect, this application provides a communications apparatus, including: a processor and a transceiver. The processor and the transceiver communicate with each other through an internal connection.

The processor is configured to perform a processing step in the method according to the first aspect or the second aspect, and the transceiver is configured to perform the receiving and sending steps in the method according to the first aspect or the second aspect.

In a possible design, the communications apparatus in the fourth aspect may be a network device or a terminal, or may be a component (for example, a chip or a circuit) of the network device or the terminal.

According to a fifth aspect, this application provides a communications apparatus, including an input interface circuit, a logic circuit, and an output interface circuit. The logic circuit is configured to perform the method according to the first aspect or the second aspect.

According to a sixth aspect, this application provides a computer-readable storage medium. The computer-readable storage medium stores a computer program, and the computer program includes instructions used to perform the method according to the first aspect or the second aspect.

According to a seventh aspect, this application provides a computer program. The computer program includes instructions used to perform the method according to the first aspect or the second aspect.

In a possible design, all or some of programs in the seventh aspect may be stored in a storage medium encapsulated with a processor, or some or all of programs may be stored in a memory that is not encapsulated with a processor.

According to an eighth aspect, an embodiment of this application further provides a system, including the communications apparatus according to the third aspect, the fourth aspect, or the fifth aspect.

According to a ninth aspect, an embodiment of this application further provides a processor. The processor includes at least one circuit, configured to perform the method according to the first aspect or the second aspect.

It can be learned that, in the foregoing aspects, the terminal receives, from the network device, the indication information used to indicate the common timing advance TA value in the satellite communications system, and determines the common TA value based on the indication information. Because the signaling overheads required by the indication information are small in comparison with the signaling overheads required by the common TA value, the signaling overheads for indicating the common TA value by the network device are reduced.

## BRIEF DESCRIPTION OF DRAWINGS

FIG. 1 is a schematic diagram of an application scenario according to an embodiment of this application;

FIG. 2 is a schematic diagram in which an uplink data frame and a downlink data frame are synchronized in the existing technology;

FIG. 3 is a schematic diagram of a satellite communications system according to an embodiment of this application;

FIG. 4 is a random access procedure in an LTE/NR protocol in the existing technology;

FIG. 5 is a flowchart of a common timing advance indication method according to an embodiment of this application;

FIG. 6 is a schematic diagram of another satellite communications system according to an embodiment of this application;

FIG. 7 is a schematic diagram of still another satellite communications system according to an embodiment of this application;

FIG. 8 is a schematic diagram of a random access response window length according to an embodiment of this application;

FIG. 9 is a schematic diagram of a first delay offset 1 between a random access preamble and a start point of an RAR window according to an embodiment of this application;

FIG. 10 is a schematic diagram of a second delay offset 2 between an L2/L3 message and a random access response according to an embodiment of this application;

FIG. 11 is a schematic diagram of a third delay offset 3 between a start moment of a contention resolution timer and an L2/L3 message according to an embodiment of this application;

FIG. 12 is a schematic diagram of a transmission interval K1 between a PDSCH and a PUCCH according to an embodiment of this application;

FIG. 13 is a schematic diagram of a transmission interval K2 between a PDCCH and a PUSCH according to an embodiment of this application;

FIG. 14 is a schematic diagram of still another satellite communications system according to an embodiment of this application;

FIG. 15 is a schematic diagram of a structure of a communications apparatus according to an embodiment of this application;

FIG. 16 is a schematic diagram of a structure of another communications apparatus according to an embodiment of this application;

FIG. 17 is a schematic diagram of a structure of still another communications apparatus according to an embodiment of this application;

FIG. 18 is a schematic diagram of a structure of still another communications apparatus according to an embodiment of this application; and

FIG. 19 is a schematic diagram of a structure of still another communications apparatus according to an embodiment of this application.

## DESCRIPTION OF EMBODIMENTS

Terms used in implementations of this application are merely used to explain specific embodiments of this application, but are not intended to limit this application.

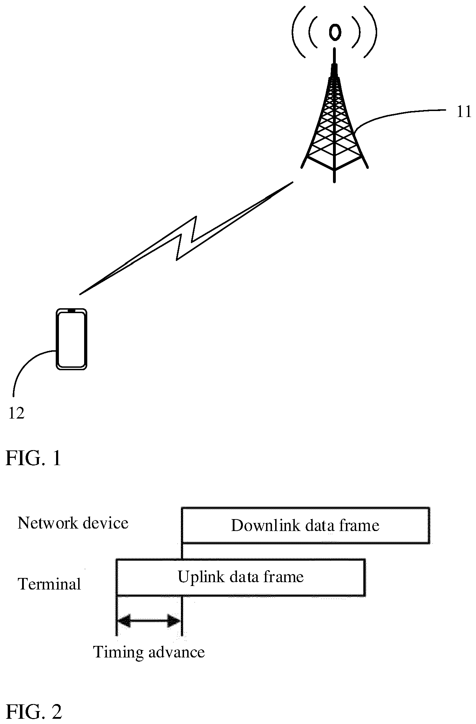

The embodiments of this application may be applied to various communications systems. FIG. 1 is a schematic diagram of an application scenario according to an embodiment of this application. A communications system shown in FIG. 1 mainly includes a network device 11 and a terminal 12.

(1) The network device 11 may be a network side device, for example, an access point (Access Point, AP) of a wireless local area network (Wireless Local Area Network, WLAN), an evolved NodeB (Evolved NodeB, eNB or eNodeB) of 4G, or a base station for next generation communication, for example, a 5G new radio access technology (New Radio Access Technology, NR) base station (next generation NodeB, gNB), a small cell, or a micro cell, or may alternatively be a relay station, a transmission and reception point (Transmission and Reception Point, TRP), a roadside unit (Road Side Unit, RSU), or the like. In this embodiment, communications systems of different communications standards have different base stations. For distinction, a base station in a 4G communications system is referred to as a long term evolution (Long Term Evolution, LTE) eNB, and a base station in a 5G communications system is referred to as an NR gNB. A base station that supports both the 4G communications system and the 5G communications system is referred to as an evolved long term evolution (Evolved Long Term Evolution, eLTE) eNB. These names are only for ease of differentiation, but are not limited in meaning.

(2) The terminal 12 is also referred to as user equipment (User Equipment, UE), and is a device that provides voice and/or data connectivity for a user, for example, a handheld device with a wireless connection function, a vehicle-mounted device, or a vehicle with a vehicle-to-vehicle (vehicle-to-vehicle, V2V) communications capability. Common terminals include, for example, a mobile phone, a tablet computer, a notebook computer, a palmtop computer, a mobile internet device (mobile internet device, MID), and a wearable device, for example, a smartwatch, a smart band, and a pedometer.

(3) The term "a plurality of" indicates two or more, and another quantifier is similar to the term "a plurality of". The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects.

It should be noted that, a quantity and a type of terminals 12 included in the communications system shown in FIG. 1 are merely an example, and this embodiment of this application is not limited thereto. For example, more terminals 12 that communicate with the network device 11 may be further included. For brevity, details are not described in the accompanying drawings. In addition, in the communications system shown in FIG. 1, although the network device 11 and the terminal 12 are shown in FIG. 1, the communications system may include but is not limited to the network device 11 and the terminal 12, for example, may further include a core network device node or a device used for a virtualized network function. This is obvious to a person of ordinary skill in the art. Details are not described herein.

It should be noted that, with continuous evolution of the communications system, names of the foregoing network elements may change in another system that may appear in the future. In this case, the solutions provided in the embodiments of this application are also applicable.

In addition, the embodiments of this application may be applied to a satellite communications system, as well as a 4G wireless communications system, a vehicle-to-everything (vehicle-to-everything, V2X) communications system, a device-to-device (Device-to-Device, D2D) communications system, a subsequent evolution communications system of LTE, a 5G communications system, and another future system.

Generally, when the terminal communicates with the network device, the terminal sends an uplink data frame to the network device, and the network device sends a downlink data frame to the terminal. Because there is a specific distance between the terminal and the network device, there is a specific delay before the uplink data frame sent by the terminal arrives at the network device. To maintain synchronization between the uplink data frame of the terminal and the downlink data frame of the network device, the network device needs to send a TA value to the terminal, and the terminal sends the uplink data frame based on the TA value. As shown in FIG. 2, an uplink data frame sent by a terminal is transmitted before a downlink data frame corresponding to the terminal. A time at which the uplink data frame is transmitted before the downlink data frame is denoted as a timing advance TA, and a TA value reflects a signal round-trip transmission delay between the terminal and a network device. In this way, when the network device receives the uplink data frame, a boundary of the uplink data frame is exactly aligned with a boundary of the downlink data frame. In addition, it needs to be ensured that a frame number of the uplink data frame is the same as a frame number of the uplink data frame. Therefore, the TA value may be used to maintain synchronization between the uplink data frame of the terminal and the downlink data frame of the network device.

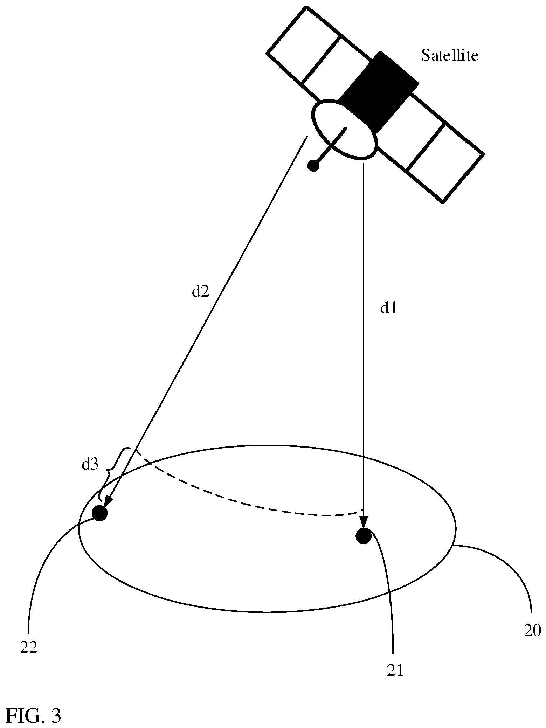

In this embodiment of this application, a satellite communications system is used as an example. As shown in FIG. 3, 20 represents a coverage area of a satellite, and there may be a plurality of terminals in the coverage area. 21 represents a reference point in the coverage area. Specifically, the reference point may be a point closest to the satellite in the coverage area. In this case, the reference point may be denoted as a near end. 22 represents any point in the coverage area other than the reference point. For example, 22 represents a point, in the coverage area, that is farthest from the satellite. In this case, the point 22 may be denoted as a remote end. As shown in FIG. 3, d1 represents a distance between the near end and the satellite, and d2 represents a distance between the remote end and the satellite. Assuming that a terminal is located at the remote end, a TA value required for communication between the terminal and the satellite is a signal round-trip transmission delay between the terminal and a network device. A part of a transmission distance of the satellite communications system is a common transmission distance. As shown in FIG. 3, the distance d1 between the near end and the satellite may be used as the common transmission distance in the coverage area 20. Correspondingly, a common round-trip transmission delay is generated when round-trip transmission of a signal is performed over the common transmission distance. Herein, the common round-trip transmission delay is denoted as a common TA value. In addition, as shown in FIG. 3, d3 = d2 - d1, namely, d2 = d3 + d1. Herein, a round-trip transmission delay generated when round-trip transmission of the signal is performed over d2 is denoted as a total round-trip transmission delay, and a round-trip transmission delay generated when round-trip transmission of the signal is performed over d3 is denoted as a terminal-specific TA value. Therefore, the terminal-specific TA value is a difference between the total round-trip transmission delay of the terminal and the common round-trip transmission delay. It may be understood that common TA values of a plurality of terminals within a same coverage area may be the same. Specifically, the common TA value may be determined based on a type of the satellite communications system and a distance between the satellite/a terrestrial station and a reference point.

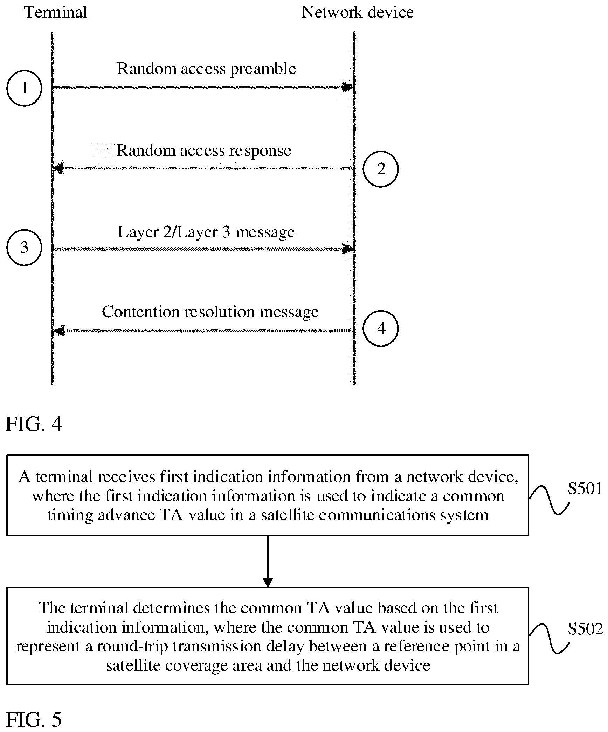

It can be learned from FIG. 3 that, when the terminal communicates with the satellite, the terminal needs to use the common TA value and the terminal-specific TA value. The following describes a process in which the terminal obtains the common TA value and the terminal-specific TA value. FIG. 4 shows a random access procedure in an LTE/NR protocol in the existing technology, which is specifically as follows. Step 1: The terminal sends a random access preamble to the network device, where the random access preamble may be specifically a preamble sequence selected by the terminal from a specified set. Step 2: The network device sends a random access response to the terminal, where the random access response may include a preamble sequence identifier, a TA value, a backoff (Backoff) indication, an initial uplink resource transmission grant (UL-grant), and a cell radio network temporary identifier (cell radio network temporary identifier, C-RNTI). Step 3: The terminal sends a layer 2/layer 3 (Layer 2/Layer 3, L2/L3) message to the network device, where the L2/L3 message may include a C-RNTI and a terminal identifier. Step 4: The network device sends a contention resolution message to the terminal.

Because in the satellite communications system, a distance between the terminal and the satellite is very long, and a signal transmission delay is high. Therefore, an absolute TA value between the terminal and the satellite, namely, the total round-trip transmission delay of the terminal described above, is large. In addition, in the satellite communications system, the absolute TA value may be divided into two parts: one part is the common TA value and the other part is the terminal-specific TA value. Therefore, when the random access procedure in the LTE/NR protocol shown in FIG. 4 is applied to the satellite communications system, the network device may send the common TA value to the terminal before step 1, and the random access response in step 2 carries the terminal-specific TA value. However, it can be learned from FIG. 3 that d3 is much smaller than d1. In other words, the terminal-specific TA value is much smaller than the common TA value. Because the absolute TA value between the terminal and the satellite is very large, the common TA value is also large. If the network device directly sends the common TA value, there may be a large quantity of bits corresponding to the common TA value. This undoubtedly causes large signaling overheads. To resolve this problem, an embodiment of this application provides a common TA value indication method. The following describes the method with reference to the specific embodiment.

FIG. 5 is a flowchart of a common timing advance indication method according to this application. As shown in FIG. 5, the common timing advance indication method in this embodiment includes the following steps.

S501: A terminal receives first indication information from a network device, where the first indication information is used to indicate a common timing advance TA value in a satellite communications system.

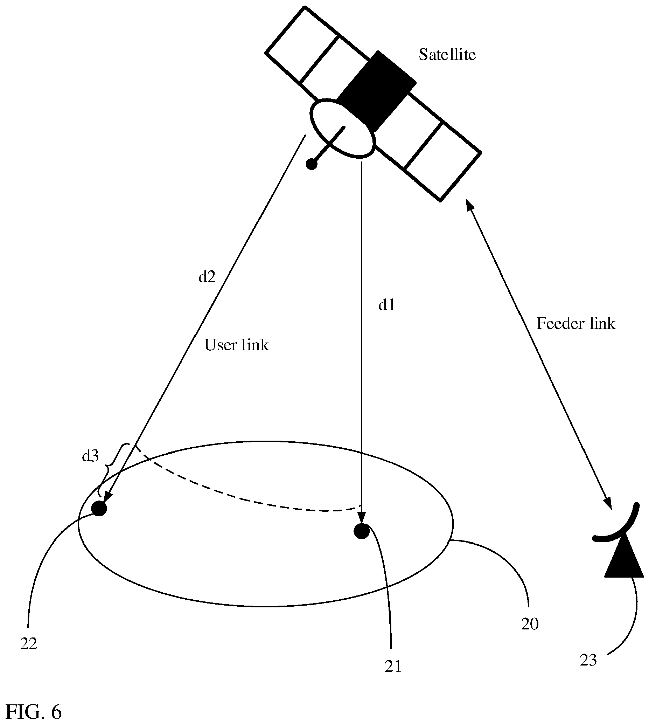

In this embodiment, the network device may be specifically a satellite in the satellite communications system, or may be a terrestrial station 23 in a satellite communications system shown in FIG. 6. The following uses the satellite as an example for description. Specifically, before the terminal performs random access, the satellite may send, in a broadcast manner, indication information used to indicate the common TA value. Herein, the indication information is denoted as the first indication information. Specifically, the first indication information may be carried in broadcast information such as a system information block (System Information Block, SIB) 1, other system information (Other System Information, OSI), or a master information block (Master Information Block, MIB). In other words, the satellite does not send the common TA value itself, but sends the indication information used to indicate the common TA value. There may be a plurality of specific indication manners. For example, an index number of the common TA value is indicated, a scaling value of the common TA value is indicated, a differential TA value between the common TA value and a benchmark TA value is indicated, the common TA value is obtained through calculation by using an agreed formula, and another manner may be used. The following embodiments describe each indication manner one by one. In this embodiment and the subsequent embodiment, the differential TA value is also referred to as a differential common TA value, and the differential common TA value is denoted as the differential TA value to facilitate distinguishing between the common TA value and the differential common TA value. In this embodiment and the subsequent embodiment, the benchmark TA value is also referred to as a benchmark common TA value, and the benchmark common TA value is denoted as the benchmark TA value to facilitate distinguishing between the common TA value and the benchmark common TA value.

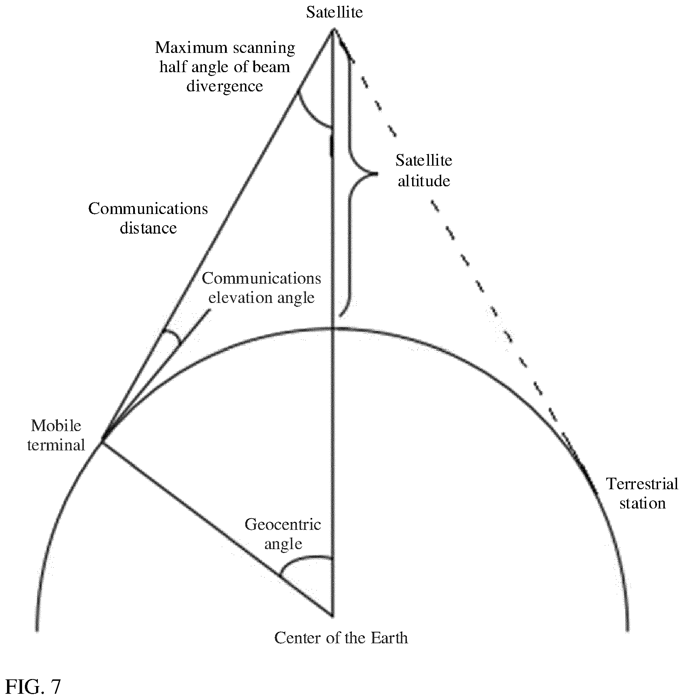

Specifically, the common TA value indicated by the satellite by using the first indication information may be a common TA value associated with a coverage area of the satellite, and there may be one or more common TA values associated with the coverage area. When the coverage area is associated with a plurality of common TA values, each of the plurality of common TA values may be TA values at different reference locations in the coverage area. When the satellite delivers a plurality of common TA values, the terminal may select one common TA value from the plurality of common TA values by using parameter information obtained through local measurement or parameter information delivered by the network device. The parameter information may be specifically a Doppler frequency offset, a Doppler frequency offset change rate, a relative angle between the terminal and the satellite, or the like. The relative angle between the terminal and the satellite may specifically include angles such as a half angle of beam divergence, a communications elevation angle, and a geocentric angle shown in FIG. 7. In addition, a terminal with a positioning function may further select one common TA value from the plurality of common TA values based on positioning information.

FIG. 7 is a schematic diagram of a scenario of a satellite communications system according to an embodiment of this application. The satellite has a signal processing capability and can transparently forward a signal sent by a mobile terminal to a terrestrial station, to implement a wide-area coverage communications scenario. The coverage area described above may be specifically one of a plurality of areas into which an entire coverage area of the satellite is divided based on different angles shown in FIG. 7. Each area may be specifically a projection area of one beam of the satellite on the ground or one satellite cell. Alternatively, each area may be a projection area of a plurality of beams of the satellite on the ground or a plurality of satellite cells. Alternatively, each area may be a partial area of a projection area of one beam of the satellite on the ground or a partial area of one satellite cell. The one satellite cell is usually a projection area of one or more beams of the satellite on the ground. Each area corresponds to one or more terminals.

In addition, the satellite may further send the broadcast information carrying the first indication information for a plurality of times, and time intervals in which the broadcast information is sent each time may be the same or different.

S502: The terminal determines the common TA value based on the first indication information, where the common TA value is used to represent a round-trip transmission delay between a reference point in a satellite coverage area and the network device.

Because the satellite carries the first indication information in the broadcast information, when receiving the broadcast information, the terminal may determine the common TA value based on the first indication information in the broadcast information. When the terminal needs to establish a connection to the satellite, the terminal may use the common TA value as a pre-compensation TA value for transmitting uplink data. For example, when the terminal sends a random access preamble to the satellite, the terminal uses the common TA value as the pre-compensation TA value for transmitting the uplink data. When sending the random access preamble, the terminal uses the common TA value as a transmission TA value.

In addition, in a radio resource control (Radio Resource Control, RRC) connection phase, that is, after the random access as shown in FIG. 4, if the common TA value needs to be updated, for example, when the common TA value is updated to meet requirements such as fast resynchronization of a prestored common TA value after out-of-synchronization, and inter-satellite handover, the network device may further add an updated TA value to at least one piece of information of RRC information, downlink control information (Downlink Control Information, DCI), a media access control (Media Access Control, MAC) element, a timing advance command (Timing Advance Command, TAC), and a separately allocated physical downlink shared channel (Physical Downlink Shared Channel, PDSCH).

In this embodiment, the terminal receives, from the network device, the indication information used to indicate the common timing advance TA value in the satellite communications system, and determines the common TA value based on the indication information. Because signaling overheads required by the indication information are small in comparison with signaling overheads required by the common TA value, signaling overheads for indicating the common TA value by the network device are reduced.

Based on the foregoing embodiment, before step S501, the method further includes the following steps.

Step 1: The terminal sends the random access preamble to the network device, where the random access preamble may be specifically a preamble sequence selected by the terminal from a specified set, and then the network device receives the random access preamble sent by the terminal, detects a preamble receiving location, obtains an uplink TA value, and generates the first indication information, where the first indication information is used to indicate the common timing advance TA value in the satellite communications system.

In a possible manner, before the network device generates the first indication information, the network device may further obtain a correspondence between an index information set and a common TA value set. For the correspondence, specifically refer to the following common TA value index table in Table 1 or Table 2 used by the terminal. Details are not described herein. The common TA value index table may be generated by the terminal, or may be generated by the network device and sent to the terminal. The first indication information may include index information of the common TA value. When receiving the first indication information, the terminal determines the common TA value based on the index information of the common TA value and the common TA value index table in Table 1 or Table 2. A specific process is described as follows. Details are not described herein. The index information may be specifically an index number.

In another possible manner, before the network device generates the first indication information, the network device may further obtain a correspondence between an index information set and a reference TA value set. For the correspondence, specifically refer to the following index table in Table 4 used by the terminal. A reference TA value may be a common TA value in the index table. Similarly, the index table may be generated by the terminal, or may be generated by the network device and sent to the terminal. In this case, the first indication information includes index information of the reference TA value corresponding to the common TA value. When receiving the first indication information, the terminal determines the reference TA value corresponding to the common TA value based on the index information of the reference TA value corresponding to the common TA value and the correspondence in Table 4; and further determines the common TA value based on at least one offset and the reference TA value corresponding to the common TA value. Specifically, the common TA value is a sum of the reference TA value and the at least one offset.

In still another possible manner, the network device may further obtain a correspondence between an index information set and an offset set. For the correspondence, specifically refer to the following correspondence in Table 5 used by the terminal. Correspondingly, the first indication information includes index information of a reference TA value, and may further include index information of at least one offset. After determining, based on the following content, the reference TA value corresponding to the common TA value, the terminal may further determine the at least one offset based on index information of the at least one offset and the correspondence in Table 5; and further determines the common TA value based on the at least one offset and the reference TA value corresponding to the common TA value. Specifically, the common TA value is a sum of the reference TA value and the at least one offset.

Step 2: The network device sends a random access response to the terminal, where the random access response includes the first indication information, and the random access response may further include one or more types of the following information: a preamble sequence identifier, a TA value, a backoff (Backoff) indication, an initial uplink resource transmission grant (UL-grant), and a cell radio network temporary identifier (cell radio network temporary identifier, C-RNTI).

The following describes several possible indication manners for the common TA value.

In a possible implementation, the first indication information in the foregoing embodiment includes the index information of the common TA value, and the index information may be specifically the index number. In this case, after receiving the first indication information, the terminal may determine the common TA value based on the index number of the common TA value and the common TA value index table. Specifically, the terminal may query the common TA value index table based on the index number of the common TA value to obtain the common TA value corresponding to the index number. The common TA value index table may have different forms, and a possible form is a correspondence shown in Table 1. Correspondingly, the network device indicates an index number of a common TA value to the terminal according to the correspondence in Table 1, and the terminal determines, according to a correspondence between the index number and Table 1, the common TA value indicated by the network device.

Table 1

| Index number | Common TA value |
|---|---|
| 0 | Common $TA_0$ |
| 1 | Common $TA_1$ |
| ... | ... |
| n | Common $TA_n$ |

Another possible form of the common TA value index table is a correspondence shown in Table 2. $x_1$ is second indication information used to indicate a satellite orbital altitude, $x_2$ is third indication information used to indicate a satellite communications system type, and $x_3$ is fourth indication information used to indicate a satellite coverage area sequence number. In this case, the index number of the common TA value may be specifically at least one of $x_1$, $x_2$, and $x_3$. In other words, indication information of a plurality of parameters may be jointly used as the index number of the common TA value. In addition, the index number of the common TA value is not limited to including the at least one of $x_1$, $x_2$, and $x_3$, and may further include indication information of another parameter. Any indication information of a satellite-related parameter may be used as the index number of the common TA value. For example, FIG. 7 shows indication information of different angles.

**Table 2**

| Satellite orbital altitude $x_1$ | Satellite communications system type $x_2$ | Coverage area sequence number $x_3$ | ... | Common TA value |
|---|---|---|---|---|
| $X_1$, n | X2, n | X3, n | ... | Common $TA_n$ |

In some application scenarios, $x_1$, $x_2$, and $x_3$ may not need to be used as the index number of the common TA value at the same time. For example, only one or two of $x_1$, $x_2$, and $x_3$ need to be used as the index numbers of the common TA value. In this case, the network device may further send, to the terminal, indication information used to indicate that some parameters are used as index numbers. For example, the indication information may include three bits, and the three bits are sequentially corresponding to $x_1$, $x_2$, and $x_3$ from left to right. It is assumed that 0 indicates that the indication information may be used as the index number, and that 1 indicates that the indication information is not used as the index number. Therefore, 001 indicates that $x_1$ and $x_2$ are used as the index numbers, and that $x_3$ is not used as the index number. In this case, the terminal only needs to query the common TA value index table (Table 2) by using $x_1$ and $x_2$, to determine common TA values corresponding to $x_1$ and $x_2$. In addition, the common TA value index table (Table 1 or Table 2) may be agreed upon by the terminal and the network device in advance, or may be delivered by the network device to the terminal.

In this embodiment, the index number of the common TA value is used to indicate the common TA value. Because a quantity of bits of the index number of the common TA value is much smaller than a quantity of bits of the common TA value, overheads for indicating the common TA value can be effectively reduced. In addition, in the satellite communications system, before the terminal sends the random access preamble to the network device, the network device sends, to the terminal, the indication information used to indicate the common TA value, so that the terminal can use the common TA value as the transmission TA value for sending the random access preamble. Therefore, a problem that the random access preamble occupies a large quantity of resources and a problem that complexity of detecting the random access preamble by the network device is high are effectively resolved.

In another possible implementation, the first indication information in the foregoing embodiment may include an index number of the scaling value of the common TA value. For example, Table 2 is used as an example. $x_1$, $x_2$, and $x_3$ in Table 2 correspond to scaling values of common TA values. The scaling value of the common TA value = the common TA value x a scaling coefficient of the common TA value. The scaling coefficient may be a coefficient greater than 0 and less than 1. For example, when the scaling coefficient is $1/2^n$, the scaling value of the common TA value = the common TA value x $1/2^n$. A quantity of bits of the scaling value of the common TA value is reduced by n bits in comparison with a quantity of bits of the common TA value. It can be learned that some signaling overheads can be reduced in this indication manner.

For example, a common TA value is 10000 time units, and one time unit is equal to $16 \cdot 64 \cdot T_c$. $T_c = 1/(\Delta f_{max} \cdot N_f)$, where $\Delta f_{max} = 480 \cdot 10^3$ Hz, and $N_f = 4096$. If a scaling coefficient of the common TA value is 0.0001, a scaling value of the common TA value is one time unit. Correspondingly, the terminal determines, based on the index number, in the first indication information, of the scaling value of the common TA value and an index table of the scaling value of the common TA value, the scaling value of the common TA value corresponding to the index number; and further determines the common TA value based on the scaling value of the common TA value and the scaling coefficient of the common TA value. For the index table of the scaling value of the common TA value, specifically refer to Table 2. Details are not described herein again. The index table of the scaling value of the common TA value may be agreed upon by the terminal and the network device in advance, or may be delivered by the network device to the terminal.

In the foregoing embodiment, because the first indication information includes the index number, the terminal needs to use the index table when determining the common TA value. In another possible implementation, the first indication information may not include an index number, but include a scaling value of the common TA value. In this case, the terminal may determine the common TA value based on the scaling value of the common TA value and a scaling coefficient of the common TA value. For example, if the scaling value of the common TA value is one time unit, and the scaling coefficient is 0.0001, the scaling value of the common TA value divided by the scaling coefficient is the common TA value, namely, 10000 time units.

The scaling coefficient of the common TA value may be agreed upon by the terminal and the network device in advance. Alternatively, the scaling coefficient may be directly sent by the network device to the terminal. In this case, the first indication information and the scaling coefficient may be carried in a same message or different messages. When the first indication information and the scaling coefficient are carried in different messages, if the network device needs to indicate the common TA value for a plurality of times, transmission intervals of the first indication information and the scaling coefficient may be the same or different. In addition, the scaling coefficient of the common TA value and a scaling coefficient of the foregoing terminal-specific TA value may be centrally or separately configured by the network device. When the scaling coefficient of the common TA value and the scaling coefficient of the foregoing terminal-specific TA value are separately configured, the scaling coefficient of the common TA value may be the same as or different from the scaling coefficient of the terminal-specific TA value.

In some embodiments, the network device may further indicate the scaling coefficient of the common TA value to the terminal by using the index number and a scaling coefficient index table. In this case, the foregoing first indication information may further include an index number of the scaling coefficient of the common TA value. Alternatively, the network device may add the first indication information and the index number of the scaling coefficient of the common TA value to different SIB messages. Before determining the common TA value based on the scaling value of the common TA value and the scaling coefficient of the common TA value, the terminal may determine the scaling coefficient of the common TA value based on the index number of the scaling coefficient of the common TA value and the scaling coefficient index table. The scaling coefficient index table may be a correspondence shown in Table 3. Alternatively, for the scaling coefficient index table, refer to the form shown in Table 2. A specific correspondence is not described herein again.

**Table 3**

| Index number | Scaling coefficient |
|---|---|
| 0 | 1/2 |
| 1 | 1/4 |
| 2 | 1/8 |
| 3 | 1/16 |

It may be understood that the scaling coefficient index table shown in Table 3 is merely example description of a correspondence between an index number and a scaling coefficient. During actual application, a quantity of index numbers and values of scaling coefficients may be adjusted based on a requirement of an application scenario. In addition, the scaling coefficient index table may be agreed upon by the terminal and the network device in advance, or may be delivered by the network device to the terminal.

In some other embodiments, the scaling coefficient of the common TA value may also be implicitly indicated by using another parameter such as a subcarrier width or a preamble structure. For example, a subcarrier width is $2^{\mu} \cdot 15$ kHz, and the scaling coefficient of the common TA value is $1 / 2^{\mu}$.

A method in which the network device indicates the common TA value to the terminal by using the scaling value of the common TA value is described in detail below by using a specific example. For example, the network device sends the scaling value of the common TA value and the index number of the scaling coefficient of the common TA value to the terminal. The scaling value of the common TA value and the index number of the scaling coefficient are carried in different SIB messages. The scaling value of the common TA value is 10000 time units, and the index number of the scaling coefficient is 0. The terminal may learn, according to Table 3, that a specific scaling coefficient is 1/2. Further, the terminal determines that the common TA value is 2 x 10000 time units, namely $2 \cdot 10000 \cdot 16 \cdot 64 \cdot T_c$.

In this embodiment, the common TA value is indicated by using the scaling value of the common TA value. In comparison with direct sending of the common TA value, signaling overheads are reduced. In addition, the scaling value of the common TA value and the scaling coefficient of the common TA value may be indicated in a plurality of manners. The common TA value is more flexibly indicated, and signaling is more flexibly configured.

In some scenarios, the common TA value required by the terminal may not be in the common TA value index table. Alternatively, the scaling value, required by the terminal, of the common TA value may not be in the index table of the scaling value of the common TA value. The common TA value index table is used as an example. Table 4 is an example of the common TA value index table. The common TA value index table includes a correspondence between a joint index number and a common TA value. It is assumed that the common TA value required by the terminal is 7685 time units, but 7685 does not exist in Table 4. In this case, the network device may update the common TA value index table. Alternatively, the common TA value is indicated to the network device by using 7680 that is close to 7685 and that exists in the common TA value index table, and at least one offset. Herein, a common TA value close to the common TA value required by the terminal is denoted as the reference TA value. For example, 7680 is a reference TA value of 7685. In this case, a common TA value required by the terminal = a reference TA value + (an offset 1 + ... + an offset N). The offset may be a positive value or a negative value.

**Table 4**

| Satellite orbital altitude $x_1$ | Satellite communications system type $x_2$ | Coverage area sequence number $x_3$ | Common TA value |
|---|---|---|---|
| 0 | 0 | 0 | 7680 |
| 0 | 0 | 1 | 9681 |
| 0 | 0 | 2 | 14064 |
| 0 | 0 | 3 | 19253 |
| 0 | 1 | 0 | 15360 |
| 0 | 1 | 1 | 17361 |
| 0 | 1 | 2 | 21744 |
| 0 | 1 | 3 | 26933 |

(continued)

| Satellite orbital altitude $x_1$ | Satellite communications system type $x_2$ | Coverage area sequence number $x_3$ | Common TA value |
|---|---|---|---|
| 1 | 0 | 0 | 8960 |
| 1 | 0 | 1 | 11096 |
| 1 | 0 | 2 | 15856 |
| 1 | 0 | 3 | 21551 |
| 1 | 1 | 0 | 17920 |
| 1 | 1 | 1 | 20056 |
| 1 | 1 | 2 | 24816 |
| 1 | 1 | 3 | 30511 |

A manner in which the network device indicates the reference TA value is similar to the manner in which the network device indicates the common TA value in the foregoing embodiment. For example, in a possible implementation, the first indication information includes an index number of the reference TA value. The terminal queries the corresponding reference TA value by using the index number and a reference TA value index table. For the reference TA value index table, refer to a form shown in Table 4. In another possible implementation, the first indication information includes an index number of a scaling value of the reference TA value. The terminal queries the scaling value of the corresponding reference TA value by using the index number and an index table of the scaling value of the reference TA value; and further determines the reference TA value based on the scaling value of the reference TA value and a scaling coefficient of the reference TA value. In still another possible implementation, the first indication information includes a scaling value of the reference TA value. The terminal determines the reference TA value based on the scaling value of the reference TA value and a scaling coefficient of the reference TA value. An indication manner for the scaling coefficient of the reference TA value is the same as the indication manner for the scaling coefficient of the common TA value in the foregoing embodiment. Details are not described herein again. Correspondingly, for each indication manner for the reference TA value, a process in which the terminal determines the reference TA value based on the first indication information is similar to the process in which the terminal determines the common TA value based on the first indication information in the foregoing embodiment. Details are not described herein again.

In this embodiment, because the common TA value = the reference TA value + (the offset 1 + ... + the offset N), the network device needs to indicate both the reference TA value and the at least one offset. The following describes an indication manner for the at least one offset.

In a possible manner, the network device may directly send the at least one offset to the terminal.

In another possible manner, the network device may send an index number of the at least one offset to the terminal.

In still another possible manner, the network device may send a scaling value of the at least one offset to the terminal.

In yet another possible manner, the network device may send an index number of a scaling value of the at least one offset to the terminal.

It should be noted that when the network device sends the index number of the at least one offset to the terminal, the terminal needs to query an offset index table by using the index number of the at least one offset to obtain the at least one offset. Alternatively, when the network device sends the index number of the scaling value of the at least one offset to the terminal, the terminal needs to query an index table of the scaling value of the offset by using the index number of the scaling value of the at least one offset to obtain the scaling value of the at least one offset. A form of the offset index table or a form of the index table of the scaling value of the offset may be a form similar to Table 1 or a form similar to Table 2. In addition, the offset index table or the index table of the scaling value of the offset may be agreed upon by the terminal and the network device in advance, or the offset index table or the index table of the scaling value of the offset is delivered by the network device to the terminal.

In addition, information used by the network device to indicate the reference TA value and information used by the network device to indicate the at least one offset may be carried in a same message. For example, the first indication information may include the index number of the reference TA value, the index number of the scaling value of the reference TA value, or the scaling value of the reference TA value. In addition, the first indication information may further include the at least one offset, the index number of the at least one offset, the scaling value of the at least one offset, or the index number of the scaling value of the at least one offset. Alternatively, information used by the network device to indicate the reference TA value and information used by the network device to indicate the at least one offset may be carried in different messages.

In addition, when the network device needs to indicate a plurality of offsets, a same indication manner may be used for different offsets. For example, the network device needs to indicate the offset 1 and the offset 2 to the terminal, and the network device may indicate the offset 1 and the offset 2 by using an index number of the offset. Specifically, the network device sends an index number of the offset 1 and an index number of the offset 2 to the terminal. Alternatively, different offsets may be indicated in different indication manners. For example, when the network device indicates the offset 1, the network device sends the offset 1 to the terminal. When the network device indicates the offset 2, the network device sends an index number of the offset 2 to the terminal. In addition, time units of different offsets may be the same or different. For example, the offset 1 uses a system slot length as a time unit, and the offset 2 uses $T_c$ as a time unit. In addition, the time unit is not limited to the system slot length or $T_c$, and may alternatively be a system frame time length, a system symbol length, or a user-defined time granularity. Alternatively, common orbit information, for example, an orbit altitude, may be used as an index of the time unit. For example, an orbit altitude of 600 km indicates that the time unit is a sub-satellite point transmission delay corresponding to an orbit of 600 km.

It may be understood that, when the network device sends the scaling value of the reference TA value and/or the scaling value of the at least one offset to the terminal, a manner in which the network device indicates the scaling coefficient of the reference TA value or a scaling coefficient of the at least one offset is similar to the manner in which the network device indicates the scaling coefficient of the common TA value in the foregoing embodiment. Details are not described herein again. In addition, when the network device indicates, by using the index number, the scaling coefficient of the reference TA value or the scaling coefficient of the at least one offset, for a corresponding scaling coefficient index table, specifically refer to the scaling coefficient index table in the foregoing embodiment.

It should be noted herein that the network device may indicate the scaling coefficient of the reference TA value and the scaling coefficient of the at least one offset in a same indication manner or different indication manners. In addition, the scaling coefficient of the reference TA value and the scaling coefficient of the at least one offset may be carried in same signaling or a same message, or different signaling or different messages. In addition, the scaling coefficient of the reference TA value, the scaling coefficient of the at least one offset, and the foregoing scaling coefficient of the terminal-specific TA value may be centrally or separately configured by the network device. When the scaling coefficient of the reference TA value, the scaling coefficient of the at least one offset, and the foregoing scaling coefficient of the terminal-specific TA value are separately configured, the scaling coefficient of the reference TA value, the scaling coefficient of the at least one offset, and the foregoing scaling coefficient of the terminal-specific TA value may be partially the same, all the same, or different from each other. In addition, a time interval at which the network device sends the scaling coefficient of the reference TA value may be the same as or different from a time interval at which the network device sends the scaling coefficient of the at least one offset.

In addition, information used by the network device to indicate the scaling coefficient of the reference TA value and/or the scaling coefficient of the at least one offset, the information used by the network device to indicate the reference TA value, and the information used by the network device to indicate the at least one offset may be carried in different messages or a same message, for example, the first indication information.

A method in which the network device indicates the common TA value by using the reference TA value and the at least one offset is described below by using a specific example. For example, the common TA value = the reference TA value + the offset 1. Specifically, the network device adds the index number of the reference TA value, a scaling value of the offset 1, and an index number of a scaling coefficient of the offset 1 to a same SIB message for broadcasting. When receiving the SIB message, the terminal obtains the index number of the reference TA value, the scaling value of the offset 1, and the index number of the scaling coefficient of the offset 1 from the SIB message. It is assumed that the index number of the reference TA value is a joint index number, and the joint index number is 001. It may be learned that the reference TA value is 9681 by querying the index table shown in Table 4 by using 001. 9681 indicates 9681 time units. If one time unit is equal to $16 \cdot 64 \cdot T_c$, the reference TA value is equal to $9681 \cdot 16 \cdot 64 \cdot T_c$. It is assumed that the scaling value of the offset 1 is 2, namely, two time units, and one time unit is equal to $16 \cdot 64 \cdot T_c$. The scaling value of the offset 1 is equal to $2 \cdot 16 \cdot 64 \cdot T_c$. It is assumed that the index number of the scaling coefficient of the offset 1 is 0. It can be learned from Table 3 that a scaling coefficient corresponding to 0 is 1/2. Therefore, the offset 1 is $2 \cdot 2 \cdot 16 \cdot 64 \cdot T_c$, and the common TA value is $(9681+2\cdot2)\cdot16\cdot64\cdot T_c$.

In this embodiment, the common TA value is indicated by using the reference TA value and the at least one offset. This can not only improve indication precision for indicating the common TA value, but also further reduce bit overheads required for indication. In addition, the scaling coefficient of the reference TA value and/or the scaling coefficient of the at least one offset are/is introduced based on the reference TA value and the at least one offset, so that on the basis of ensuring the indication precision, signaling overheads can be further reduced, and the common TA value can be more flexibly indicated. In addition, different offsets use a same time unit or different time units, so that the network device only needs to indicate that an offset is several times a time unit. This enables the network device to minimize indication overheads for a total offset.

In an alternative manner of the foregoing embodiment, a differential TA value = the common TA value - a benchmark TA value. The benchmark TA value is similar to the reference TA value in the foregoing embodiment, and the differential TA value is similar to the offset in the foregoing embodiment. Therefore, when indicating the common TA value, the network device may indicate only the differential TA value, or indicate both the differential TA value and the benchmark TA value. When both the differential TA value and the benchmark TA value are indicated, an indication manner for the differential TA value may be the same as or different from an indication manner for the benchmark TA value. For example, when the network device indicates the differential TA value, the network device sends an index number of the differential TA value to the terminal. When the network device indicates the benchmark TA value, the network device sends a scaling value of the benchmark TA value to the terminal. In addition, information used to indicate the differential TA value and information used to indicate the benchmark TA value may be carried in same signaling or a same message, or different signaling or different messages. Optionally, the network device independently configures the differential TA value and the benchmark TA value by using different signaling. When the differential TA value and the benchmark TA value are independently configured, configuration of the differential TA value is irrelevant to configuration of the benchmark TA value. When the network device needs to indicate the common TA value for a plurality of times, the network device needs to configure a plurality of differential TA values and a plurality of benchmark TA values. Specifically, a transmission interval of information used to indicate the differential TA values may be the same as or different from a transmission interval of information used to indicate the benchmark TA values.

The following describes a plurality of manners in which the network device indicates the differential TA value.

In a possible manner, the first indication information includes the differential TA value.

In another possible manner, the first indication information includes a scaling value of the differential TA value.

In still another possible manner, the first indication information includes an index number of the differential TA value.

In yet another possible manner, the first indication information includes an index number of a scaling value of the differential TA value.

When the network device indicates the differential TA value by using the index number of the differential TA value, the terminal needs to determine the differential TA value based on the index number of the differential TA value and a differential TA value index table. The differential TA value index table may be specifically in a form shown in Table 5, or a joint index manner shown in Table 2.

**Table 5**

| Index number | Differential TA value |
|---|---|
| 0 | $\triangle$Common $TA_0$ |
| 1 | $\triangle$Common $TA_1$ |
| ... | ... |
| n | $\triangle$Common $TA_n$ |

In this embodiment, the benchmark TA value may be a value agreed upon by the network device and the terminal, or may be indicated by the network device. A specific indication manner is similar to the indication manner for the reference TA value in the foregoing embodiment. Details are not described herein again. In addition, in this embodiment, the network device may further send information related to a benchmark point to the terminal, and the terminal may determine the benchmark TA value based on the information related to the benchmark point. For example, the information related to the benchmark point may be a sequence number of a satellite coverage area in which the benchmark point is located. The terminal queries the index table shown in Table 1 by using the sequence number to obtain the benchmark TA value. Alternatively, the information related to the benchmark point may be an angle, a time parameter, or the like shown in FIG. 7. In this case, the terminal may obtain the benchmark TA value through calculation by using the angle or the time parameter, and an agreed formula.

In addition, the benchmark TA value in this embodiment is a common TA value associated with a satellite coverage area. The benchmark TA value may be in a plurality of forms, for example, may be in a satellite-specific form, a cell-specific form, a beam-specific form, or the like. In addition, another form is not excluded. In the satellite-specific form, a TA value of a sub-satellite point is usually used as the benchmark TA value. In the cell-specific form, a TA value at a point, in a cell, closest to a satellite is usually used as the benchmark TA value.

A method in which the network device indicates the differential TA value to the terminal is described below by using a specific example. For example, the network device adds the differential TA value to a SIB message for broadcasting. When receiving the SIB message, the terminal obtains the differential TA value from the SIB message. It is assumed that the differential TA value is 546, that is, 546 time units are represented. If one time unit is equal to $16 \cdot 64$

$\cdot$ $T_c$ , the differential TA value is equal to $546 \cdot 16 \cdot 64 \cdot T_c$ . In addition, if the benchmark TA value is a value agreed upon in advance by the terminal and the network device, for example, a TA value of a sub-satellite point of a satellite whose orbit altitude is 600 km is used as the benchmark TA value, and the benchmark TA value is equal to $7680 \cdot 16 \cdot 64 \cdot T_c$ , the terminal may determine the common TA value as $(7680 + 546) \cdot 16 \cdot 64 \cdot T_c$ .

In this embodiment, a method in which the network device indicates a difference between the common TA value and the benchmark TA value to the terminal is used to divide the common TA value into two parts: the benchmark TA value and the differential TA value. When the benchmark TA value is a pre-agreed value, the network device only needs to indicate the differential TA value to the terminal, to minimize signaling overheads. When the benchmark TA value is not a pre-agreed value, the common TA value is more flexibly indicated by indicating the benchmark TA value and the differential TA value in different manners.

In the foregoing embodiment, the common TA value is a value indicated by the network device. In this embodiment, the common TA value may alternatively be a value determined by the terminal based on some signaling delivered by the network device. The signaling may be delivered by the network device before the terminal performs random access, or may be delivered by the network device in an RRC connection phase.

The following uses the signaling delivered by the network device before the terminal performs random access as an example for description.

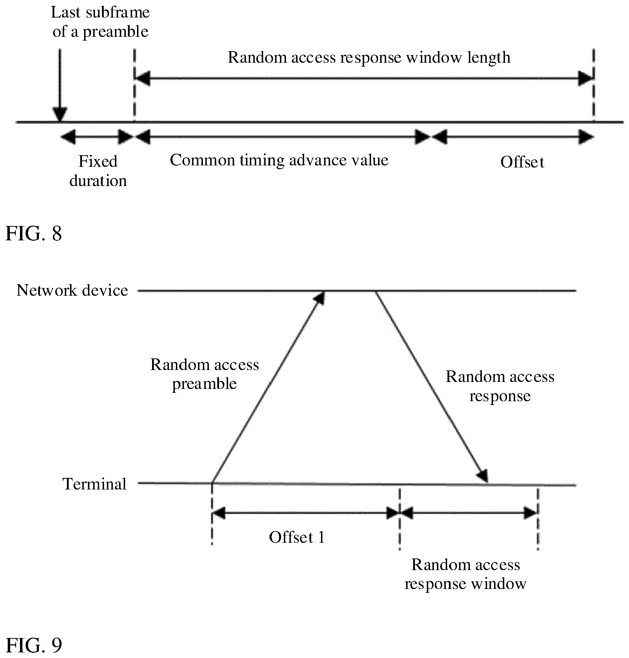

In a possible manner, the network device adds, to a SIB 1, at least one of random access response (Random Access Response, RAR) window signaling (namely, ra-ResponseWindow signaling) and random access response contention resolution timer signaling (namely, ra-ContentionResolutionTimer signaling). The ra-ResponseWindow signaling includes an RAR window length. As shown in FIG. 8, the RAR window length is related to the common TA value. Specifically, the RAR window length may be expressed as a sum of a common TA value and an offset. The offset is related to factors such as a maximum round-trip delay difference in a satellite coverage area associated with the common TA value and a signal processing delay of the network device. The maximum round-trip delay difference may be a difference between a remote-end signal round-trip delay and a near-end signal round-trip delay shown in FIG. 3. The ra-ContentionResolutionTimer signaling includes a contention resolution timer length. Specifically, as shown in FIG. 4, after the terminal sends the L2/L3 message to the network device, the terminal starts a contention resolution timer. If the contention resolution timer expires and the terminal still does not receive the contention resolution message from the network device, it is determined that contention resolution fails. Because there is a large transmission delay in the satellite communications system, the common TA value is a factor that affects the contention resolution timer length. In other words, the contention resolution timer length is related to the common TA value.

Correspondingly, when receiving the ra-ResponseWindow signaling and/or the ra-ContentionResolutionTimer signaling, the terminal may determine the common TA value based on the RAR window length and/or the contention resolution timer length, and a specific rule. Alternatively, when having obtained the common TA value, the terminal may further derive the RAR window length and/or the contention resolution timer length according to a specific rule.

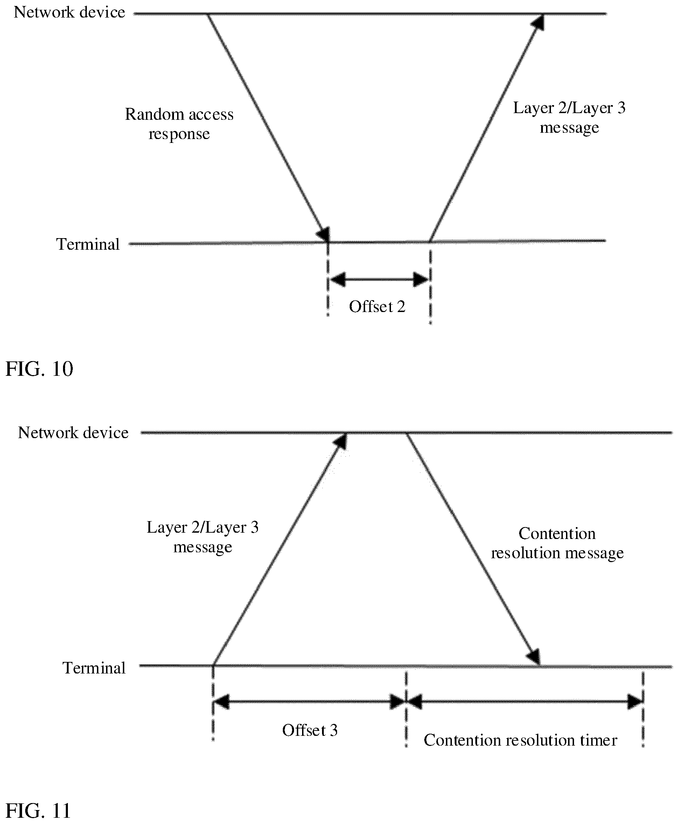

In another possible manner, the network device sends, to the terminal, at least one of a first delay offset 1 between the random access preamble and a start point of the RAR window, a second delay offset 2 between the L2/L3 message and the random access response, and a third delay offset 3 between a start moment of the contention resolution timer and the L2/L3 message. The offset 1 is shown in FIG. 9, the offset 2 is shown in FIG. 10, and the offset 3 is shown in FIG. 11. The offset 1, the offset 2, and the offset 3 may be carried in different signaling or different messages, or same signaling or a same message. The offset 1, the offset 2, and the offset 3 are separately related to the common TA value. Therefore, when receiving the at least one of the offset 1, the offset 2, and the offset 3, the terminal may determine the common TA value based on the at least one of the offset 1, the offset 2, and the offset 3, and a specific rule. Alternatively, when having obtained the common TA value, the terminal may further derive the at least one of the offset 1, the offset 2, and the offset 3 according to a specific rule.

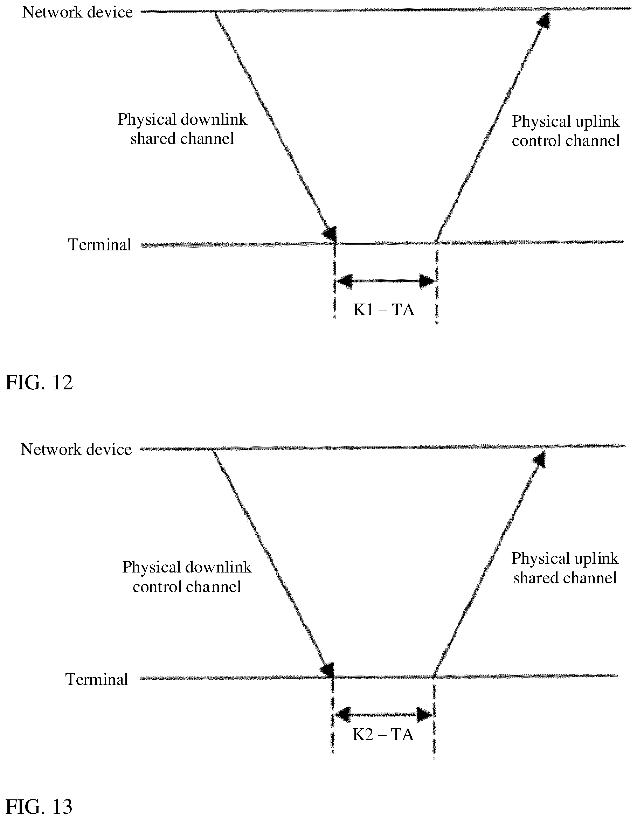

In the RRC connection phase, when the network device needs to update the common TA value, the network device may send, to the terminal, a transmission interval K1 between a PDSCH and a physical uplink control channel (Physical Uplink Control Channel, PUCCH) for transmitting hybrid automatic repeat request (Hybrid Automatic Repeat Request, HARQ) acknowledgment (acknowledgement, ACK); and/or the network device sends, to the terminal, a transmission interval K2 between a physical downlink control channel (Physical Downlink Control Channel, PDCCH) and a physical uplink shared channel (Physical Uplink Shared Channel, PUSCH). As shown in FIG. 12, K1 may be specifically a time interval between sending of the PDSCH by the network device and receiving of the PUCCH by the network device. Because the TA value reflects a signal round-trip transmission delay between the terminal and the network device, a time interval between receiving of the PDSCH by the terminal and sending of the PUCCH by the terminal is K1 - TA. Similarly, as shown in FIG. 13, K2 may be specifically a time interval between sending of the PDCCH by the network device and receiving of the PUSCH by the network device. A time interval between receiving of the PDCCH by the terminal and sending of the PUSCH by the terminal is K2 - TA. Specifically, K1 and K2 may be carried in different signaling or different messages, or same signaling or a same message. K1 and K2 are separately related to the common TA value. Therefore, when receiving K1 and/or K2, the terminal may determine the common TA value based on K1 and/or K2 according to a specific rule. Alternatively, when having obtained the common TA value, the terminal may further derive K1 and/or K2 according to a specific rule.

It should be noted that, because uplink and downlink timing differences of the satellite communications system are greatly different from uplink and downlink timing differences of a terrestrial communications system, impact of a large transmission delay difference needs to be considered for values of K1 and K2 in the satellite communications system. In other words, values of K1 and K2 defined in the terrestrial communications system are no longer applicable to the satellite communications system. K1 and K2 used in the satellite communications system need to be increased or added by an increment based on the existing definition. For example, a related parameter for configuring K1 may be reconfigured. Alternatively, an increment indicated by the network device or an agreed value may be added based on an original parameter configuration. Alternatively, K1 in different types of satellite communications systems may be flexibly adapted by using RRC signaling or the like. K2 may be specifically configured by using the RRC signaling, but a configuration parameter needs to be redesigned.

In this embodiment, parameters such as the foregoing RAR window length, contention resolution timer length, offset 1, offset 2, offset 3, K1, and K2 may be denoted as parameters related to the common TA value.

It may be understood that the reference TA value in the foregoing embodiment may also be determined by using the parameter related to the common TA value in this embodiment. For example, the network device sends, to the terminal, signaling carrying the parameter related to the common TA value. After receiving the signaling, the terminal obtains the related parameter in the signaling, determines the reference TA value by using the related parameter, and further obtains the common TA value through calculation by using the reference TA value and the at least one offset.

A method in which the network device indicates the common TA value by using the parameter related to the common TA value is described below by using a specific example. For example, the network device separately adds the ra-ResponseWindow signaling and an offset to different SIB messages, and broadcasts the corresponding SIB messages. The RAR window length in the ra-ResponseWindow signaling is used to indicate the reference TA value. When receiving the corresponding SIB messages, the terminal obtains the ra-ResponseWindow signaling and the offset from the corresponding SIB messages. It is assumed that the RAR window length included in the ra-ResponseWindow signaling is 10 timeslots. For example, when a subcarrier width is $2^\mu \cdot 15$ kHz, a slot length is $T_{slot} = 1/2^\mu$ ms. It is assumed that the subcarrier width in this embodiment is 15 kHz. A length of the 10 timeslots is 10 ms, and 10 ms corresponds to $19200 \cdot 16 \cdot 64 \cdot T_c$. For example, the reference TA value is $19200 \cdot 16 \cdot 64 \cdot T_c$. In addition, it is assumed that the offset is 480, that is, 480 time units are represented. If one time unit is equal to $16 \cdot 64 \cdot T_c$, the offset is equal to $480 \cdot 16 \cdot 64 \cdot T_c$. In addition, in this embodiment, the common TA value = the reference TA value - (the offset 1 + ... + the offset N). Therefore, the common TA value determined by the terminal is $(19200 - 480) \cdot 16 \cdot 64 \cdot T_c$.

In this embodiment, the network device sends the parameter related to the common TA value to the terminal, so that the terminal obtains the common TA value through calculation by using the parameter related to the common TA value. This fully utilizes the related parameter in the signaling delivered by the network device, and further reduces signaling overheads required for indicating the common TA value.

In another alternative manner of the foregoing embodiment, the network device may deliver some specific parameters in the satellite communications system to the terminal, and the terminal may obtain the common TA value through calculation by using the specific parameters and a corresponding geometric formula or fitting formula. A manner in which the network device indicates the specific parameter is not limited in this embodiment. For example, the network device may directly send the specific parameter, send a scaling value of the specific parameter, send an index number of the specific parameter, send an index number of a scaling value of the specific parameter, or the like. When there are a plurality of specific parameters, different specific parameters may be indicated in different indication manners or a same indication manner. Indication information of different specific parameters may be carried in same signaling or a same message, or different signaling or different messages. Transmission time intervals of the indication information of different specific parameters may be the same or different.

In a feasible implementation, the network device sends a satellite orbital altitude, angle information, or a function expression of the angle information to the terminal. The angle information may include the elevation angle, the half angle of beam divergence, the geocentric angle, and the like shown in FIG. 7. The geocentric angle is used as an example for schematic description. For example, the satellite orbital altitude sent by the network device to the terminal is denoted as $h$, and a cosine function of the geocentric angle sent by the network device to the terminal is $\cos \alpha$, where $\alpha$ is the geocentric angle. The terminal may obtain the common TA value through calculation by using the following formula (1):

$$\text{Common Delay} = \frac{2 \times \sqrt{r^2 + (r+h)^2 - 2r(r+h)\cos\alpha}}{c} \quad (1).$$

Common Delay represents the common TA value, $c$ represents a speed of light, and $r$ represents the radius of the Earth. The radius of the Earth $r$ may be known to the terminal, or may be delivered by the network device to the terminal.

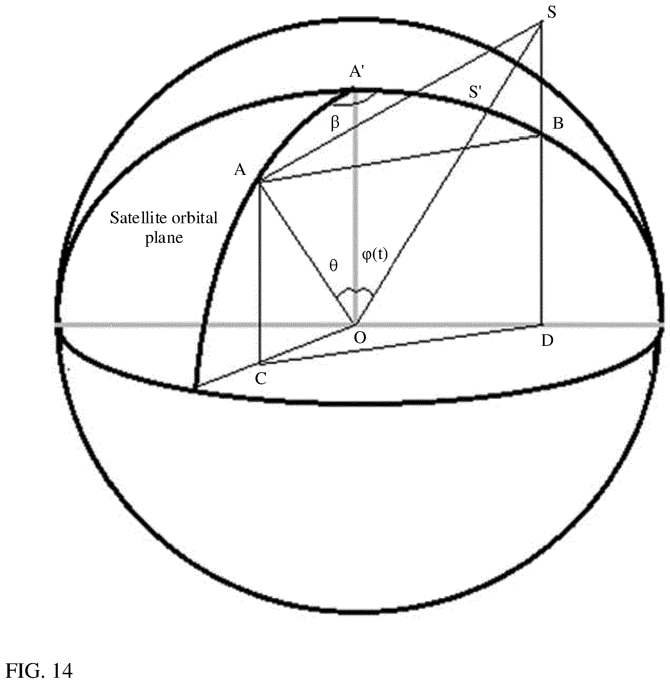

In another feasible implementation, as shown in FIG. 14, O represents the center of the Earth, S represents a satellite whose operating orbit is a circular orbit, and a distance between the center of the Earth O and the satellite S is denoted as R . A represents a ground preset point, namely, a fixed point on the ground. It is assumed that the terminal is at the point A . An arc passing through a reference point A' and a point B represents projection of a satellite orbit on the ground. The reference point A' represents projection of the point A on the arc. The radius of the Earth may be denoted as r. For example, a distance between the reference point A' and the center of the Earth O is r, and a distance between the point A and the center of the Earth O is r . A relationship between the reference point A' and the point A may be expressed by an angle $\beta$ and an angle $\theta$. $\beta$ represents an included angle of a plane, namely, an included angle between a plane OAA' and a satellite orbital plane. The satellite orbital plane is a plane, namely, $\beta=\angle COD$ , passing through planes of the center of the Earth O , the reference point A', the point B , and the point D . A point C is a projected point of the point A on a plane perpendicular to the satellite orbital plane, and the point D is a projected point of the satellite S on a plane perpendicular to the satellite orbital plane. $\theta$ is a projection angle, namely, an angle $\angle AOA'$ between OA and OA ', of the satellite orbital plane of the point A . Alternatively, $\theta$ may be equivalently represented by an arc length $l_{AA'}=\theta r$. A geocentric angle between the satellite S and the reference point A' at a current moment t may be represented by $\varphi(t)=\omega t$ . $\omega$ represents a relative angular velocity between the satellite S and the reference point A' . $\varphi(t)$ may alternatively be equivalently represented by an arc length $l_{S'A'}=\varphi(t)r$. A point S' represents an intersection point of a connection line between the satellite S and the center of the Earth O with the arc passing through the reference point A' and the point B . The angle $\beta$ , the angle $\theta$, and an equivalent representation of the angle $\theta$, and the angle $\varphi(t)$ and an equivalent representation of the angle $\varphi(t)$ may be used to represent a relative position between the point A and the satellite S .

Based on the foregoing known parameters, $AC = r\cos\theta$ , $OC = r\sin\theta$, $SD = R\cos\varphi(t)$, and $OD = R\sin\varphi(t)$ may be determined. Because V SAB is a right triangle, $SA^2 = AB^2 + SB^2$. $AB^2$ may be represented by the following formula (2):

$$AB^2 = CD^2 = OC^2 + OD^2 - 2OC \cdot OD \cos \angle COD \quad (2).$$

$OC^2 = r^2 \sin^2 \theta$, and $OD^2 = R^2 \sin^2 \varphi(t)$. Therefore, $AB^2$ may be further represented by the following formula (3):

$$AB^2 = r^2 \sin^2 \theta + R^2 \sin^2 \varphi(t) - 2Rr \sin \theta \sin \varphi(t) \cos \beta \quad (3).$$

In addition, $SB^2 = (SD - BD)^2 = (SD - AC)^2 = (R\cos\varphi(t) - r\cos\theta)^2$. Therefore, the following formula (4) may be derived:

$$SA^2 = R^2 + r^2 - 2Rr\left[\sin\theta\cos\beta\sin\varphi(t) + \cos\theta\cos\varphi(t)\right] \quad (4).$$

Further, the following formula (5) may be obtained by substituting $\varphi(t) = \omega t$ into the formula (4):

$$SA = \sqrt{R^2 + r^2 - 2Rr\left[\sin\theta\cos\beta\sin(\omega t) + \cos\theta\cos(\omega t)\right]} \quad (5).$$

Further, the following formula (6) may be obtained by using the foregoing formula (5):

$$\text{Common Delay} = \frac{2 \times \sqrt{R^2 + r^2 - 2Rr\left[\sin\theta\cos\beta\sin(\omega t) + \cos\theta\cos(\omega t)\right]}}{c} \quad (6).$$

Common Delay represents the common TA value, and c represents the speed of light.

For example, at a moment $t_0$ , the network device may send, to the terminal, the angle $\beta$ , the angle $\theta$, a geocentric angle $\varphi(t_0)=\omega t_0$ between the satellite S and the reference point A' at the moment $t_0$ , and a movement direction of the satellite S relative to the reference point A' at the moment $t_0$ . The angle $\theta$ may be replaced with the equivalent arc length $l_{AA'}=\theta r$, and the geocentric angle $\varphi(t_0)=\omega t_0$ may also be replaced with an equivalent arc length $l_{S'A'}=\varphi(t_0)r$. After receiving the parameters, the terminal substitutes the parameters into the formula (6) to obtain the common TA value through calculation. The radius of the Earth r and the distance R between the center of the Earth O and the satellite S may be known to the terminal, or may be delivered by the network device to the terminal. It may be understood that, according to (6), the common TA value changes with time. Therefore, the network device only needs to deliver the foregoing parameter to the terminal for one time at the moment $t_0$ , and the terminal can continuously calculate the common TA value at each moment by using (6).

In still another feasible implementation, a relationship between the geocentric angle $\alpha$ and the common TA value may be fitted into a form similar to a quadratic function curve, and the quadratic function curve may be represented by the following formula (7):

$$TA(\alpha) = a\alpha^2 + b|\alpha| + c \quad (7).$$

$TA(\alpha)$ represents a function value related to the common TA value and the geocentric angle $\alpha$, and $\alpha$ , $b$ , and C are function coefficients respectively.

The network device may send $\alpha$ , $b$ , C, and $\alpha$ to the terminal, or send some parameters of $\alpha$ , $b$ , C, and $\alpha$ to the terminal. The terminal may determine the common TA value by using the formula (7) and the parameter that is delivered by the network device.

It may be understood that the specific parameter, in the satellite communications system, sent by the network device to the terminal is not limited to the parameter in this embodiment, and may also be other information such as Doppler frequency offset information, other angle information, and time information. In addition, when parameters delivered by the network device are different, the terminal needs to obtain the common TA value through calculation by using different formulas or fitting functions.

For ease of understanding, a method for obtaining the common TA value through calculation by using the specific parameter, and an agreed formula or a fitting function is described below by using a specific example. For example, the network device sends the satellite orbital altitude and a cosine value of the geocentric angle between the terminal and the satellite at a current moment to the terminal. Specifically, the satellite orbital altitude and the cosine value of the geocentric angle are carried in different SIB messages. It is assumed that the satellite orbital altitude is 600 km. The cosine value of the geocentric angle between the terminal and the satellite at the current moment is 0.962. Correspondingly, the terminal substitutes the satellite orbital altitude 600 and the cosine value 0.962 of the geocentric angle into the formula (1). The radius of the Earth $r$ is equal to 6378 km, and is a known parameter. The common TA value obtained through calculation is 12.88 ms. According to foregoing $T_c = 1 / (\Delta f_{max} \cdot N_f)$, $\Delta f_{max} = 480 \cdot 10^3$ Hz, and $N_f$ = 4096. It may determine that the common TA value is $24730 \cdot 16 \cdot 64 \cdot T_c$.

In this embodiment, the network device sends the specific parameter in the satellite communications system to the terminal, so that the terminal can obtain the common TA value through calculation by using the specific parameter, and the agreed formula or the fitting function, or even obtain, through calculation, the common TA value changing with the time. In comparison with direct sending of the common TA value by the network device, signaling overheads are reduced, and the common TA value is more flexibly indicated.

It should be noted that the several indication manners for the common TA value in the foregoing embodiment are applicable to different types of satellite communications systems. For example, the several indication manners can be applied to a regeneration satellite communications system and a transparent forwarding satellite communications system. The regeneration satellite communications system and the transparent forwarding satellite communications system are classified based on a processing capability of a satellite. Specifically, a satellite in the transparent forwarding satellite communications system only transparently transmits a signal and shifts a spectrum, and does not process the signal itself. The satellite in the regeneration satellite communications system can extract an original baseband signal, and use information for routing switch, and system configuration. Currently, the transparent forwarding satellite communications system and the regeneration satellite communications system coexist.

In addition, a type of the satellite communications system is not limited to the regeneration satellite communications system and the transparent forwarding satellite communications system. Specifically, different types of satellite communications systems may be classified according to different classification standards. For example, satellite communications systems may be classified, based on satellite orbital altitudes, into a geostationary Earth orbit (Geostationary Earth Orbit, GEO) system, a medium Earth orbit (Medium Earth Orbit, MEO) satellite communications system, and a low Earth orbit (Low Earth Orbit, LEO) satellite communications system. Satellite communications systems may be classified into a satellite communications system without electronic beam steering and a satellite communications system with electronic beam steering based on whether a satellite beam changes with motion of a satellite. In the satellite communications system without electronic beam steering, beam angles of a satellite do not change with time from a perspective of the satellite, and a ground fixed point undergoes frequent beam switching in a period when the satellite goes over the top. In the satellite communications system with electronic beam steering, a beam angle of a satellite is adjusted in a specific manner, and the satellite can implement continuous observation of a ground fixed point by switching the beam angle.

In addition, the several indication manners for the common TA value in the foregoing embodiment are also applicable to other types of satellite communications systems. Further, the several indication manners for the common TA value in the foregoing embodiment are applicable to a scenario in which the network device indicates the common TA value to the terminal before the terminal sends the random access preamble to the network device, and also applicable to a scenario in which the network device updates the common TA value in the RRC connection phase after the terminal performs random access. For the terminal-specific TA value, the network device may directly send the specific TA value to the terminal, or may indicate the specific TA value to the terminal in several indication manners similar to the several indication manners for the common TA value in the foregoing embodiment.

The foregoing common TA value is described below by using the regeneration satellite communications system and the transparent forwarding satellite communications system as an example.

Specifically, for the regeneration satellite communications system, the foregoing common TA value may be specifically a common TA value of a user link. The user link is a link between a terminal and a satellite, for example, a user link between a terminal located at the remote end 22 and the satellite shown in FIG. 6.

For the transparent forwarding satellite communications system, the foregoing common TA value includes two parts: one part is a common TA value of a user link in a satellite coverage area, and the other part is a common TA value of a feeder link. The feeder link is a link between a terrestrial station and a satellite, for example, a feeder link between the terrestrial station 23 and the satellite shown in FIG. 6.

In the transparent forwarding satellite communications system, the common TA value of the feeder link may be presented in the following several different forms.

In a possible presentation form, the common TA value of the feeder link is visible to the terminal. In this case, in the several indication manners for the common TA value in the foregoing embodiment, the common TA value indicated by the network device may be a sum of the common TA value of the user link and the common TA value of the feeder link. In other words, the common TA value indicated by the network device is a total common TA value of the user link and the feeder link. The total common TA value may vary with time. In this case, the network device needs to update the common TA value indicated to the terminal.

Alternatively, the common TA value indicated by the network device is the common TA value of the user link or the common TA value of the feeder link. In other words, the common TA value of the user link and the common TA value of the feeder link are indicated by segment. When the network device indicates the common TA value of the user link and the common TA value of the feeder link by segment, an indication manner for the common TA value of the user link may be the same as or different from an indication manner for the common TA value of the feeder link. For example, the indication manner for the common TA value of the user link may be any indication manner in the foregoing embodiment. The indication manner for the common TA value of the feeder link may be specifically: The network device sends relative location information of the terrestrial station and the satellite to the terminal, and the terminal obtains, through calculation, the common TA value of the feeder link by using the relative location information of the terrestrial station and the satellite, and an agreed formula.

Another possible presentation form of the common TA value of the feeder link is that the common TA value of the feeder link is invisible to the terminal. For example, the network device may indicate the common TA value of the user link and the common TA value of the feeder link to the terminal. The network device may indicate the common TA value of the user link in any indication manner in the foregoing embodiment. The common TA value, of the feeder link, indicated by the network device to the terminal may be 0, a TA value corresponding to a maximum distance between the satellite and the terrestrial station, another specific value, or invalid information. Alternatively, the network device may indicate the common TA value of the feeder link in any indication manner in the foregoing embodiment. Alternatively, the common TA value of the feeder link may be a value predetermined by the terminal and the network device, or may be a value directly delivered by the network device.

When the network device indicates the common TA value of the user link and the common TA value of the feeder link by segment, whether the common TA value of the feeder link is valid may be flexibly configured. For example, the network device may add a flag bit to indication information. The flag bit may be denoted as TransparentIndicateFlag. For example, when TransparentIndicateFlag = 0, it indicates that the common TA value of the feeder link is invalid, and when TransparentIndicateFlag = 1, it indicates that the common TA value of the feeder link is valid. Alternatively, some parameters of the feeder link may be set to specific preset values to indicate whether the common TA value of the feeder link is valid. For example, angle information used by the feeder link is set to a value that does not belong to $[-\pi, \pi]$, to indicate that the common TA value of the feeder link is invalid.

It may be understood that some or all of the steps or operations in the foregoing embodiments are merely examples. In this embodiment of this application, other operations or variations of the operations may be further performed. In addition, the steps may be performed in sequences different from the sequences presented in the foregoing embodiments, and not all operations in the foregoing embodiments are necessarily to be performed.

It may be understood that, in the foregoing embodiments, operations or steps implemented by the terminal may also be implemented by a component (for example, a chip or a circuit) that can be used in the terminal, and operations or steps implemented by the network device may also be implemented by a component (for example, a chip or a circuit) that can be used in the network device.

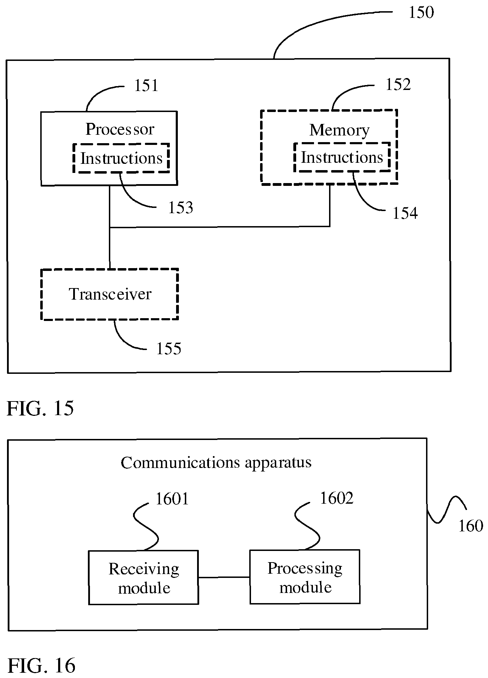

FIG. 15 is a schematic diagram of a structure of a communications apparatus. The communications apparatus may be configured to implement the method in the part corresponding to the network device or the method in the part corresponding to the terminal in the foregoing method embodiment. For details, refer to the description in the foregoing method embodiment.

The communications apparatus 150 may include one or more processors 151. The processor 151 may also be referred to as a processing unit, and may implement a specific control function. The processor 151 may be a general-purpose processor, a special-purpose processor, or the like.

In an optional design, the processor 151 may also store instructions 153, and the instructions may be run by the processor, so that the communications apparatus 150 performs the method, in the foregoing method embodiment, corresponding to the terminal or the network device.

In another possible design, the communications apparatus 150 may include a circuit. The circuit may implement a sending, receiving, or communications function in the foregoing method embodiment.

Optionally, the communications apparatus 150 may include one or more memories 152. The memory stores instructions 154 or intermediate data. The instructions 154 may be run on the processor, so that the communications apparatus 150 performs the method in the foregoing embodiment. Optionally, the memory may further store other related data. Optionally, the processor may also store instructions and/or data. The processor and the memory may be separately disposed, or may be integrated together.

Optionally, the communications apparatus 150 may further include a transceiver 155.

The processor 151 may be referred to as a processing unit. The transceiver 155 may be referred to as a transceiver unit, a transceiver machine, a transceiver circuit, a transceiver, or the like, and is configured to implement a transceiver function of the communications apparatus.

If the communications apparatus is configured to implement an operation corresponding to the network device in FIG. 5, for example, the transceiver may send the first indication information to the terminal, the transceiver may further complete another corresponding communications function. The processor is configured to complete a corresponding determining or control operation, and optionally, may further store corresponding instructions in the memory. For specific processing manners of components, refer to related description in the foregoing embodiment.

If the communications apparatus is configured to implement an operation corresponding to the terminal in the embodiment shown in FIG. 5, the transceiver is configured to receive the first indication information, and the processor is configured to determine the common TA value based on the first indication information. Optionally, the transceiver may be further configured to complete another related communications operation, and the processor may be further configured to complete another corresponding determining or control operation. Optionally, the memory may further store corresponding instructions. For specific processing manners of components, refer to related description in the foregoing embodiment.

The processor and the transceiver in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may also be manufactured by using various 1C process technologies, for example, a complementary metal-oxide-semiconductor (complementary metal-oxide-semiconductor, CMOS), an N-channel metal oxide semiconductor (N-channel metal oxide semiconductor, NMOS), a P-channel metal oxide semiconductor (P-channel metal oxide semiconductor, PMOS), a bipolar junction transistor (Bipolar Junction Transistor, BJT), a bipolar CMOS (BiCMOS), silicon germanium (SiGe), gallium arsenide (GaAs), and the like.

Optionally, the communications apparatus may be an independent device or may be a part of a large device. For example, the device may be:

(1) an independent integrated circuit IC, a chip, or a chip system or subsystem;
(2) a set having one or more ICs, where optionally, the IC set may also include a storage component configured to store data and/or instructions;
(3) an ASIC, for example, a modem (MSM);
(4) a module that can be embedded in another device;
(5) a receiver, a terminal, a cellular phone, a wireless device, a handheld device, a mobile unit, or a network device; or
(6) a device in another form.

FIG. 16 is a schematic diagram of a structure of another communications apparatus according to an embodiment of this application. As shown in FIG. 16, the communications apparatus 160 includes a receiving module 1601 and a processing module 1602. The receiving module 1601 is configured to receive first indication information from a network device. The first indication information is used to indicate a common timing advance TA value in a satellite communications system. The processing module 1602 is configured to determine the common TA value based on the first indication information. The common TA value is used to represent a round-trip transmission delay between a reference point in a satellite coverage area and the network device.

In FIG. 16, further, the first indication information includes index information of the common TA value. The processing module 1602 is specifically configured to determine the common TA value based on the index information of the common TA value and a correspondence between an index information set and a common TA value set. The index information includes at least one of second indication information used to indicate a satellite orbital altitude, third indication information used to indicate a satellite communications system type, and fourth indication information used to indicate a satellite coverage area sequence number.

In a possible manner, the first indication information includes index information of a scaling value of the common TA value. The processing module 1602 is specifically configured to: determine the scaling value of the common TA value based on the index information of the scaling value of the common TA value and a correspondence between an index information set and a common TA scaling value set; and determine the common TA value based on the scaling value of the common TA value and a scaling coefficient of the common TA value.

In another possible manner, the first indication information includes a scaling value of the common TA value. The processing module 1602 is specifically configured to determine the common TA value based on the scaling value of the common TA value and a scaling coefficient of the common TA value.

Optionally, the first indication information further includes index information of a scaling coefficient of the common TA value. Before determining the common TA value based on a scaling value of the common TA value and the scaling coefficient of the common TA value, the processing module 1602 is further configured to determine the scaling coefficient of the common TA value based on the index information of the scaling coefficient of the common TA value and a correspondence between an index information set and a scaling coefficient set.

Optionally, the first indication information includes index information of a benchmark TA value corresponding to the common TA value. The processing module 1602 is specifically configured to: determine, based on the index information of the benchmark TA value corresponding to the common TA value and a correspondence between an index information set and a benchmark TA value set, the benchmark TA value corresponding to the common TA value; and determine the common TA value based on at least one offset and the benchmark TA value corresponding to the common TA value. The common TA value is a sum of the at least one offset and the benchmark TA value corresponding to the common TA value.

Optionally, the first indication information includes index information of a scaling value of a benchmark TA value corresponding to the common TA value. The processing module 1602 is specifically configured to: determine, based on the index information of the scaling value of the benchmark TA value corresponding to the common TA value and a correspondence between an index information set and a benchmark TA scaling value set, the scaling value of the benchmark TA value corresponding to the common TA value; determine, based on the scaling value of the benchmark TA value corresponding to the common TA value and a scaling coefficient of the benchmark TA value corresponding to the common TA value, the benchmark TA value corresponding to the common TA value; and determine the common TA value based on at least one offset and the benchmark TA value corresponding to the common TA value. The common TA value is a sum of the at least one offset and the benchmark TA value corresponding to the common TA value.

Optionally, the first indication information includes a scaling value of a benchmark TA value corresponding to the common TA value. The processing module 1602 is specifically configured to: determine, based on the scaling value of the benchmark TA value corresponding to the common TA value and a scaling coefficient of the benchmark TA value corresponding to the common TA value, the benchmark TA value corresponding to the common TA value; and determine the common TA value based on at least one offset and the benchmark TA value corresponding to the common TA value. The common TA value is a sum of the at least one offset and the benchmark TA value corresponding to the common TA value.

Optionally, the first indication information further includes index information corresponding to the scaling coefficient of the benchmark TA value corresponding to the common TA value. Before determining, based on the scaling value of the benchmark TA value corresponding to the common TA value and the scaling coefficient of the benchmark TA value corresponding to the common TA value, the benchmark TA value corresponding to the common TA value, the processing module 1602 is further configured to determine, based on the index information corresponding to the scaling coefficient of the benchmark TA value corresponding to the common TA value and a correspondence between an index information set and a scaling coefficient set, the scaling coefficient of the benchmark TA value corresponding to the common TA value.

Optionally, the first indication information further includes the at least one offset.

Optionally, the first indication information further includes index information of the at least one offset. Before determining the common TA value based on the at least one offset and the benchmark TA value corresponding to the common TA value, the processing module 1602 is further configured to determine the at least one offset based on the index information of the at least one offset and a correspondence between an index information set and an offset set.

Optionally, the first indication information further includes index information of a scaling value of the at least one offset. Before determining the common TA value based on at least one offset and the benchmark TA value corresponding to the common TA value, the processing module 1602 is further configured to: determine the scaling value of the at least one offset based on the index information of the scaling value of the at least one offset and a correspondence between an index information set and an offset scaling value set; and determine the at least one offset based on the scaling value of the at least one offset and a scaling coefficient of the at least one offset.

Optionally, the first indication information further includes a scaling value of the at least one offset. Before determining the common TA value based on at least one offset and the benchmark TA value corresponding to the common TA value, the processing module 1602 is further configured to determine the at least one offset based on the scaling value of the at least one offset and a scaling coefficient of the at least one offset.

Optionally, the first indication information further includes index information of the scaling coefficient of the at least one offset. Before determining the at least one offset based on the scaling value of the at least one offset and a scaling coefficient of the at least one offset, the processing module 1602 is further configured to determine the scaling coefficient of the at least one offset based on the index information of the scaling coefficient of the at least one offset and a correspondence between an index information set and a scaling coefficient set.

Optionally, the index information includes at least one of second indication information used to indicate a satellite orbital altitude, third indication information used to indicate a satellite communications system type, and fourth indication information used to indicate a satellite coverage area sequence number.

In a possible design, the first indication information includes a differential TA value. Correspondingly, the terminal determines the common TA value based on the differential TA value and a benchmark TA value. The common TA value is a sum of the benchmark TA value and the differential TA value.

In a possible design, the first indication information includes a scaling value of a differential TA value. Correspondingly, the terminal determines the differential TA value based on the scaling value of the differential TA value and a scaling coefficient of the differential TA value. Further, the terminal determines the common TA value based on the differential TA value and a benchmark TA value. The common TA value is a sum of the benchmark TA value and the differential TA value.

In a possible design, the first indication information includes an index number of a differential TA value. Correspondingly, the terminal determines the differential TA value based on the index number of the differential TA value and a correspondence between an index information set and a differential TA value set. Further, the terminal determines the common TA value based on the differential TA value and a benchmark TA value. The common TA value is a sum of the benchmark TA value and the differential TA value.

In a possible design, the first indication information includes an index number of a scaling value of a differential TA value. Correspondingly, the terminal determines the scaling value of the differential TA value based on the index number of the scaling value of the differential TA value and a correspondence between an index information set and a scaling value set of the differential TA value; and determines the differential TA value based on the scaling value of the differential TA value and a scaling coefficient of the differential TA value. Further, the terminal determines the common TA value based on the differential TA value and a benchmark TA value. The common TA value is a sum of the benchmark TA value and the differential TA value.

In a possible design, the first indication information further includes the benchmark TA value.

In a possible design, the first indication information further includes an index number of the benchmark TA value.

In a possible design, the first indication information further includes a scaling value of the benchmark TA value.

In a possible design, the first indication information further includes an index number of a scaling value of the benchmark TA value.

In a possible design, the terminal receives signaling delivered by the network device. The terminal determines the common TA value or the reference TA value based on the signaling.

In a possible design, the signaling includes at least one of random access response window signaling and contention resolution timer signaling. The random access response window signaling includes an RAR window length, and the contention resolution timer signaling includes a contention resolution timer length. The RAR window length is related to the common TA value or the reference TA value, and the contention resolution timer length is related to the common TA value or the reference TA value.

In a possible design, the signaling includes at least one of a first delay offset 1 between a random access preamble and a start point of an RAR window, a second delay offset 2 between an L2/L3 message and a random access response, and a third delay offset 3 between a start moment of a contention resolution timer and an L2/L3 message. The offset 1, the offset 2, and the offset 3 are separately related to the common TA value or the reference TA value.

In a possible design, the signaling includes a transmission interval K1 between a PDSCH and a PUCCH, and/or a transmission interval K2 between a PDCCH and a PUSCH. K1 and K2 are separately related to the common TA value or the reference TA value.

In a possible design, the terminal receives a satellite-related specific parameter or a specific parameter, in the satellite communications system, sent by the network device. The terminal obtains, through calculation, the common TA value according to the specific parameter and a preset geometric formula or fitting formula.

In a possible design, the specific parameter includes the satellite orbital altitude and angle information in the satellite communications system. Correspondingly, the geometric formula is a functional relationship between the common TA value, the satellite orbital altitude, and the angle information.

In a possible design, the angle information in the satellite communications system includes at least one of an elevation angle, a half angle of beam divergence, and a geocentric angle.

In a possible design, the specific parameter includes a first angle, a second angle, and a third angle. The first angle is an included angle between a first plane and a satellite orbital plane. The first plane is a plane including the center of the Earth, a ground preset point, and a plane of a first point. The first point is a projected point of the ground preset point on a first arc, and the first arc is a projected line of a satellite orbit on the ground. The second angle is an included angle between a first straight line and a second straight line. The first straight line passes through the center of the Earth and the ground preset point, and the second straight line passes through the center of the Earth and the first point. The third angle is a geocentric angle, at a current moment, between a satellite and the first point.

In a possible design, the specific parameter includes a geocentric angle and a coefficient in the fitting formula. The fitting formula is a functional relationship between the common TA value and the coefficient. Correspondingly, the geometric formula is a functional relationship between the common TA value, a first angle, a second angle, and a third angle. The first angle, the second angle, and the third angle are used to represent relative positions between a ground preset point and a satellite.

The communications apparatus in the embodiment shown in FIG. 16 may be configured to perform the technical solution in the foregoing method embodiment. For an implementation principle and a technical effect of the communications apparatus, further refer to related description in the method embodiment. Optionally, the communications apparatus may be a terminal, or may be a component (for example, a chip or a circuit) of the terminal.

In addition, an embodiment of this application further provides another communications apparatus. The communications apparatus includes a generation module and a sending module. The generation module is configured to generate first indication information. The sending module is configured to send the first indication information. The first indication information is used to indicate a common timing advance TA value in a satellite communications system, and the common TA value is used to represent a round-trip transmission delay between a reference point in a satellite coverage area and the network device.

In a possible design, before the network device generates the first indication information, the method further includes: The network device obtains a correspondence between an index information set and a common TA value set. The first indication information includes index information of the common TA value.

In another possible design, before the network device generates the first indication information, the method further includes: The network device generates a correspondence between an index information set and a reference TA value set. The first indication information includes index information of a reference TA value corresponding to the common TA value, and the common TA value is a sum of at least one offset and the reference TA value corresponding to the common TA value.

In still another possible design, before the network device generates the first indication information, the method further includes: The network device generates a correspondence between an index information set and an offset set. The first indication information further includes index information of the at least one offset.

The communications apparatus in the embodiment may be configured to perform the technical solution in the foregoing method embodiment. For an implementation principle and a technical effect of the communications apparatus, further refer to related description in the method embodiment. Optionally, the communications apparatus may be the network device, or may be a component (for example, a chip or a circuit) of the network device.

It should be understood that division into the foregoing modules of the communications apparatus shown in FIG. 16 is merely logical function division. In an actual implementation, all or some of the modules may be integrated into one physical entity, or may be physically separated. In addition, all of the modules may be implemented in a form of software invoked by a processing element or in a form of hardware. Alternatively, some of the modules may be implemented in a form of software invoked by a processing element, and some of the modules may be implemented in a form of hardware. For example, the processing module may be an independent processing element; or may be integrated in a chip of the communications apparatus, for example, a terminal, for implementation; or moreover, may alternatively be stored in a memory of the communications apparatus in a form of a program, and is invoked by a processing element of the communications apparatus to perform the functions of the foregoing modules. An implementation of another module is similar to an implementation of the processing module. In addition, all or some of these modules may be integrated together, or may be implemented separately. The processing element described herein may be an integrated circuit, and has a signal processing capability. In an implementation process, steps in the foregoing methods or the foregoing modules may be implemented by using a hardware integrated logical circuit in the processing element, or by using instructions in a form of software.

For example, the foregoing modules may be configured as one or more integrated circuits for implementing the foregoing method, for example, one or more application-specific integrated circuits (Application-Specific Integrated Circuit, ASIC), one or more microprocessors (digital signal processor, DSP), or one or more field programmable gate arrays (Field Programmable Gate Array, FPGA), or the like. For yet another example, when one of the foregoing modules is implemented in a form of a processing element scheduling a program, the processing element may be a general-purpose processor, for example a central processing unit (Central Processing Unit, CPU) or another processor that can invoke the program. For yet another example, these modules may be integrated together and implemented in a form of a system-on-a-chip (system-on-a-chip, SOC).

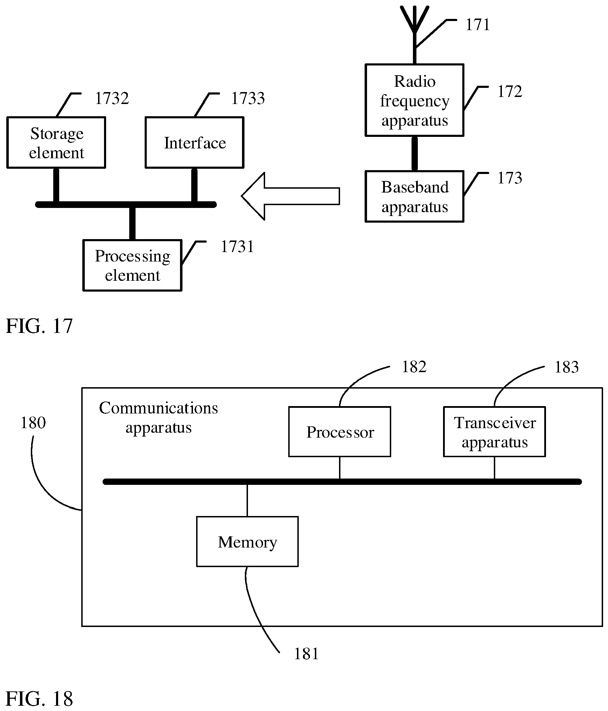

FIG. 17 is a schematic diagram of a structure of still another communications apparatus according to an embodiment of this application. The communications apparatus may be specifically a network device. As shown in FIG. 17, the network device includes an antenna 171, a radio frequency apparatus 172, and a baseband apparatus 173. The antenna 171 is connected to the radio frequency apparatus 172. In an uplink direction, the radio frequency apparatus 172 receives, through the antenna 171, information sent by a terminal, and sends, to the baseband apparatus 173 for processing, the information sent by the terminal. In a downlink direction, the baseband apparatus 173 processes the information of the terminal, and sends the information to the radio frequency apparatus 172. The radio frequency apparatus 172 processes the information of the terminal, and then sends processed information to the terminal through the antenna 171.

The foregoing communications apparatus may be located at the baseband apparatus 173. In an implementation, the foregoing units are implemented by a processing element scheduling a program. For example, the baseband apparatus 173 includes a processing element and a storage element, and the processing element 1731 invokes a program stored in the storage element 1732, to perform the method in the foregoing method embodiment. In addition, the baseband apparatus 173 may further include an interface 1733, configured to exchange information with the radio frequency apparatus 172. The interface is, for example, a common public radio interface (common public radio interface, CPRI).

In another implementation, the foregoing modules may be configured as one or more processing elements to implement the foregoing method, and the processing elements are arranged on the baseband apparatus 173. The processing element herein may be an integrated circuit, for example, one or more ASICs, one or more DSPs, or one or more FPGAs. These integrated circuits may be integrated together to form a chip.

For example, the foregoing modules may be integrated in a form of a system-on-a-chip (system-on-a-chip, SOC). For example, the baseband apparatus 173 includes an SOC chip, configured to implement the foregoing method. The processing element 1731 and the storage element 1732 may be integrated into the chip, and the processing element 1731 invokes the program stored in the storage element 1732, to implement the foregoing method or functions of the foregoing modules. Alternatively, at least one integrated circuit may be integrated in the chip to implement the foregoing method or functions of the foregoing modules. Alternatively, the foregoing implementations may be combined, so that functions of some units are implemented by the processing element invoking a program, and functions of some units are implemented by using an integrated circuit.

Regardless of a manner, the communications apparatus includes at least one processing element, a storage element, and a communications interface, and the at least one processing element is configured to perform the method provided in the foregoing method embodiment. The processing element may perform some or all of the steps in the foregoing method embodiment in a first manner of executing the program stored in the storage element, or in a second manner, to be specific, a manner of using a hardware integrated logic circuit in the processing element in combination with instructions. Certainly, the method provided in the foregoing method embodiment may alternatively be performed by combining the first manner with the second manner.

The processing element herein is the same as that described above, and may be a general-purpose processor, for example, a central processing unit (Central Processing Unit, CPU); or may be further configured as one or more integrated circuits for implementing the foregoing method, for example, one or more application-specific integrated circuits (Application-Specific Integrated Circuit, ASIC), one or more microprocessors (digital signal processor, DSP), or one or more field programmable gate arrays (Field Programmable Gate Array, FPGA). The storage element may be one memory, or may be a general term of a plurality of storage elements.

FIG. 18 is a schematic diagram of a structure of still another communications apparatus according to an embodiment of this application. As shown in FIG. 18, the communications apparatus 180 includes a processor 182 and a transceiver apparatus 183. The transceiver apparatus 183 receives first indication information from a network device. The first indication information is used to indicate a common timing advance TA value in a satellite communications system. The processor 182 determines the common TA value based on the first indication information. The common TA value is used to represent a round-trip transmission delay between a reference point in a satellite coverage area and the network device. Further, the communications apparatus 180 further includes a memory 181, configured to store a computer program or instructions, and the processor 182 is configured to invoke the program or the instructions.

The communications apparatus in the embodiment shown in FIG. 18 may be configured to perform the technical solution in the foregoing method embodiment. For an implementation principle and a technical effect of the communications apparatus, further refer to related description in the method embodiment. Details are not described herein again. The communications apparatus may be a terminal, or may be a component (for example, a chip or a circuit) of the terminal.

In FIG. 18, the transceiver apparatus 183 may be connected to an antenna. In a downlink direction, the transceiver apparatus 183 receives, through the antenna, information sent by a network device, and sends the information to the processor 182 for processing. In an uplink direction, the processor 182 processes data of the terminal, and sends the data to the network device by using the transceiver apparatus 183.

Optionally, the processor 182 may be configured to implement a corresponding function of the processing module 1602 of the communications apparatus shown in FIG. 16, and the transceiver apparatus may be configured to implement a corresponding function of the receiving module 1601 of the communications apparatus shown in FIG. 16. Alternatively, some or all of the foregoing modules may be implemented in a form of an integrated circuit that is embedded in a chip of the terminal. In addition, the modules may be separately implemented, or may be integrated together. The foregoing modules may be configured as one or more integrated circuits for implementing the foregoing method, for example, one or more application-specific integrated circuits (Application-Specific Integrated Circuit, ASIC), one or more microprocessors (digital signal processor, DSP), or one or more field programmable gate arrays (Field Programmable Gate Array, FPGA).

An embodiment of this application further provides a computer-readable storage medium. The computer-readable storage medium stores a computer program. When the computer program runs on a computer, the computer is enabled to perform the common timing advance indication method in the foregoing embodiment.

In addition, an embodiment of this application further provides a computer program product. The computer program product includes a computer program. When the computer program runs on a computer, the computer is enabled to perform the common timing advance indication method in the foregoing embodiment.

In addition, an embodiment of this application further provides a processor. The processor includes at least one circuit, configured to perform the common timing advance indication method in the foregoing embodiment.

In addition, an embodiment of this application further provides a system. The system includes the foregoing terminal and network device.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a special-purpose computer, a computer network, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk)), or the like.

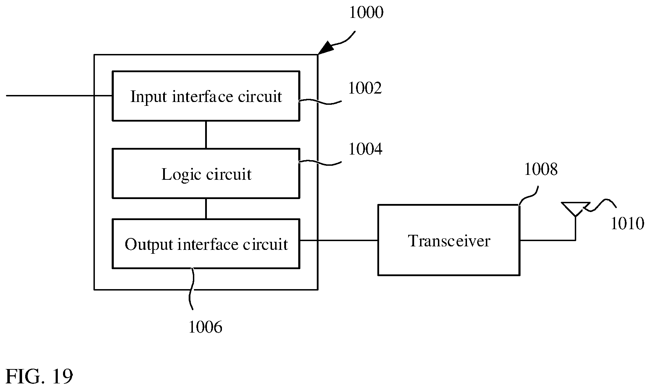

Based on a same inventive idea as the method provided in the foregoing embodiment of this application, an embodiment of this application further provides a communications apparatus, configured to implement the method in the foregoing embodiment. Some or all of the methods in the foregoing embodiments may be implemented by using hardware or software. When hardware is used for implementation, as shown in FIG. 19, the communications apparatus 1000 includes an input interface circuit 1002, a logic circuit 1004, an output interface circuit 1006, and further includes a transceiver 1008 and an antenna 1010. The transceiver 1008 receives and sends data through the antenna 1010.

The logic circuit 1004 is configured to perform the common timing advance indication method shown in FIG. 5. For details, refer to the description in the foregoing method embodiment. The details are not described herein again. In a specific implementation, the communications apparatus 1000 may be a chip or an integrated circuit.

**Claims**

1. A common timing advance indication method, comprising:

   receiving, by a terminal, first indication information from a network device, wherein the first indication information is used to indicate a common timing advance TA value in a satellite communications system; and
   determining, by the terminal, the common TA value based on the first indication information, wherein the common TA value is used to represent a round-trip transmission delay between a reference point in a satellite coverage area and the network device.

**2.** The method according to claim 1, wherein the first indication information comprises index information of the common TA value; and
the determining, by the terminal, the common TA value based on the first indication information comprises:

determining, by the terminal, the common TA value based on the index information of the common TA value and a correspondence between an index information set and a common TA value set, wherein
the index information comprises at least one of second indication information used to indicate a satellite orbital altitude, third indication information used to indicate a satellite communications system type, and fourth indication information used to indicate a satellite coverage area sequence number.

**3.** The method according to claim 1, wherein the first indication information comprises index information of a reference TA value corresponding to the common TA value; and
the determining, by the terminal, the common TA value based on the first indication information comprises:

determining, by the terminal based on the index information of the reference TA value corresponding to the common TA value and a correspondence between an index information set and a reference TA value set, the reference TA value corresponding to the common TA value; and
determining, by the terminal, the common TA value based on at least one offset and the reference TA value corresponding to the common TA value, wherein the common TA value is a sum of the at least one offset and the reference TA value corresponding to the common TA value.

**4.** The method according to claim 1, wherein the first indication information comprises index information of a scaling value of a reference TA value corresponding to the common TA value; and
the determining, by the terminal, the common TA value based on the first indication information comprises:

determining, by the terminal based on the index information of the scaling value of the reference TA value corresponding to the common TA value and a correspondence between an index information set and a benchmark TA scaling value set, the scaling value of the reference TA value corresponding to the common TA value;
determining, by the terminal based on the scaling value of the reference TA value corresponding to the common TA value and a scaling coefficient of the reference TA value corresponding to the common TA value, the reference TA value corresponding to the common TA value; and
determining, by the terminal, the common TA value based on at least one offset and the reference TA value corresponding to the common TA value, wherein the common TA value is a sum of the at least one offset and the reference TA value corresponding to the common TA value.

**5.** The method according to claim 1, wherein the first indication information comprises a scaling value of a reference TA value corresponding to the common TA value; and
the determining, by the terminal, the common TA value based on the first indication information comprises:

determining, by the terminal based on the scaling value of the reference TA value corresponding to the common TA value and a scaling coefficient of the reference TA value corresponding to the common TA value, the reference TA value corresponding to the common TA value; and
determining, by the terminal, the common TA value based on at least one offset and the reference TA value corresponding to the common TA value, wherein the common TA value is a sum of the at least one offset and the reference TA value corresponding to the common TA value.

**6.** The method according to claim 4 or 5, wherein the first indication information further comprises index information corresponding to the scaling coefficient of the reference TA value corresponding to the common TA value; and
before the determining, by the terminal based on the scaling value of the reference TA value corresponding to the common TA value and a scaling coefficient of the reference TA value corresponding to the common TA value, the reference TA value corresponding to the common TA value, the method further comprises:
determining, by the terminal based on the index information corresponding to the scaling coefficient of the reference TA value corresponding to the common TA value and a correspondence between an index information set and a scaling coefficient set, the scaling coefficient of the reference TA value corresponding to the common TA value.

**7.** The method according to any one of claims 3 to 6, wherein the first indication information further comprises the at least one offset.

8. The method according to any one of claims 3 to 6, wherein the first indication information further comprises index information of the at least one offset; and
before the determining, by the terminal, the common TA value based on at least one offset and the reference TA value corresponding to the common TA value, the method further comprises:
determining, by the terminal, the at least one offset based on the index information of the at least one offset and a correspondence between an index information set and an offset set.

9. The method according to any one of claims 3 to 6, wherein the first indication information further comprises index information of a scaling value of the at least one offset; and
before the determining, by the terminal, the common TA value based on at least one offset and the reference TA value corresponding to the common TA value, the method further comprises:

    determining, by the terminal, the scaling value of the at least one offset based on the index information of the scaling value of the at least one offset and a correspondence between an index information set and an offset scaling value set; and
    determining, by the terminal, the at least one offset based on the scaling value of the at least one offset and a scaling coefficient of the at least one offset.

10. The method according to any one of claims 3 to 6, wherein the first indication information further comprises a scaling value of the at least one offset; and
before the determining, by the terminal, the common TA value based on at least one offset and the reference TA value corresponding to the common TA value, the method further comprises:
determining, by the terminal, the at least one offset based on the scaling value of the at least one offset and a scaling coefficient of the at least one offset.

11. The method according to claim 9 or 10, wherein the first indication information further comprises index information of the scaling coefficient of the at least one offset; and
before the determining, by the terminal, the at least one offset based on the scaling value of the at least one offset and a scaling coefficient of the at least one offset, the method further comprises:
determining, by the terminal, the scaling coefficient of the at least one offset based on the index information of the scaling coefficient of the at least one offset and a correspondence between an index information set and a scaling coefficient set.

12. The method according to any one of claims 3, 4, 6, 8, 9, and 11, wherein the index information comprises at least one of second indication information used to indicate a satellite orbital altitude, third indication information used to indicate a satellite communications system type, and fourth indication information used to indicate a satellite coverage area sequence number.

13. A common timing advance indication method, comprising:

    generating, by a network device, first indication information; and
    sending, by the network device, the first indication information, wherein the first indication information is used to indicate a common timing advance TA value in a satellite communications system, and the common TA value is used to represent a round-trip transmission delay between a reference point in a satellite coverage area and the network device.

14. The method according to claim 13, wherein before the generating, by a network device, first indication information, the method further comprises:

    obtaining, by the network device, a correspondence between an index information set and a common TA value set, wherein
    the first indication information comprises index information of the common TA value.

15. The method according to claim 13, wherein before the generating, by a network device, first indication information, the method further comprises:

    obtaining, by the network device, a correspondence between an index information set and a reference TA value set, wherein

the first indication information comprises index information of a reference TA value corresponding to the common TA value, and the common TA value is a sum of at least one offset and the reference TA value corresponding to the common TA value.

16. The method according to claim 15, wherein before the generating, by a network device, first indication information, the method further comprises:

obtaining, by the network device, a correspondence between an index information set and an offset set, wherein the first indication information further comprises index information of the at least one offset.

17. A communications apparatus, comprising a unit configured to perform the method according to any one of claims 1 to 12 or claims 13 to 16.

18. A communications apparatus, comprising a processor and a transceiver, wherein the processor and the transceiver communicate with each other through an internal connection, and the processor is configured to perform a processing step in the method according to any one of claims 1 to 12 or claims 13 to 16.

19. A communications apparatus, comprising an input interface circuit, a logic circuit, and an output interface circuit, wherein the logic circuit is configured to perform the method according to any one of claims 1 to 12 or claims 13 to 16.

20. A computer-readable storage medium, configured to store a computer program, wherein the computer program comprises instructions used to perform the method according to any one of claims 1 to 12 or claims 13 to 16.

21. A computer program, wherein the computer program comprises instructions used to perform the method according to any one of claims 1 to 12 or claims 13 to 16.

22. A processor, wherein the processor comprises at least one circuit, configured to perform the method according to any one of claims 1 to 12 or claims 13 to 16.

FIG. 1

FIG. 2

FIG. 3

Terminal                                    Network device

Random access preamble

① ──────────────────────────────────────►

Random access response

◄────────────────────────────────────── ②

Layer 2/Layer 3 message

③ ──────────────────────────────────────►

Contention resolution message

◄────────────────────────────────────── ④

FIG. 4

A terminal receives first indication information from a network device, where the first indication information is used to indicate a common timing advance TA value in a satellite communications system                    S501

The terminal determines the common TA value based on the first indication information, where the common TA value is used to represent a round-trip transmission delay between a reference point in a satellite coverage area and the network device                    S502

FIG. 5

Satellite

d2

d1

User link

Feeder link

d3

22

21

20

23

FIG. 6

Satellite

Maximum scanning
half angle of beam
divergence

Satellite
altitude

Communications
distance

Communications
elevation angle

Mobile
terminal

Terrestrial
station

Geocentric
angle

Center of the Earth

FIG. 7

Last subframe
of a preamble

Random access response window length

Fixed
duration

Common timing advance value

Offset

FIG. 8

Network device

Random access
preamble

Random access
response

Terminal

Offset 1

Random access
response window

FIG. 9

FIG. 10

FIG. 11

Network device

Physical downlink
shared channel

Physical uplink
control channel

Terminal

K1 – TA

FIG. 12

Network device

Physical downlink
control channel

Physical uplink
shared channel

Terminal

K2 – TA

FIG. 13

FIG. 14

150

151

Processor

Instructions

153

152

Memory

Instructions

154

Transceiver

155

FIG. 15

Communications apparatus

1601

1602

160

Receiving module

Processing module

FIG. 16

1732  1733

Storage
element

Interface

171

Radio
frequency
apparatus

172

Baseband
apparatus

173

Processing
element

1731

FIG. 17

182  183

180

Communications
apparatus

Processor

Transceiver
apparatus

Memory

181

FIG. 18

1000

1002

Input interface circuit

1004

Logic circuit

1008

Output interface circuit

1006

Transceiver

1010

FIG. 19

## INTERNATIONAL SEARCH REPORT

| | |
|---|---|
| International application No. | |
| | **PCT/CN2020/089682** |

**A. CLASSIFICATION OF SUBJECT MATTER**

H04W 56/00(2009.01)i

According to International Patent Classification (IPC) or to both national classification and IPC

**B. FIELDS SEARCHED**

Minimum documentation searched (classification system followed by classification symbols)

H04W; H04B; H04L

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 卫星通信, 定时提前, 指示信息, 索引, 时延, 移动, satellite communication, TA, timing advance, indication, index, delay, move

**C. DOCUMENTS CONSIDERED TO BE RELEVANT**

| Category* | Citation of document, with indication, where appropriate, of the relevant passages | Relevant to claim No. |
|---|---|---|
| X | CN 107197517 A (UNIVERSITY OF ELECTRONIC SCIENCE AND TECHNOLOGY OF CHINA) 22 September 2017 (2017-09-22) description, paragraphs [0041]-[0067] | 1-22 |
| A | CN 107333241 A (UNIVERSITY OF ELECTRONIC SCIENCE AND TECHNOLOGY OF CHINA) 07 November 2017 (2017-11-07) entire document | 1-22 |
| A | WO 2014126794 A1 (MOTOROLA SOLUTIONS, INC.) 21 August 2014 (2014-08-21) entire document | 1-22 |
| A | THALES et al. "3GPP TSG RAN Plenary Meeting #78 RP-172277" *NR-NTN: Analysis of the applicability of NR numerology to satellite communication,* 21 December 2017 (2017-12-21), entire document | 1-22 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2020** | **11 August 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/089682**

| Patent document cited in search report | | | Publication date (day/month/year) | Patent family member(s) | | | Publication date (day/month/year) |
|---|---|---|---|---|---|---|---|
| CN | 107197517 | A | 22 September 2017 | None | | | |
| CN | 107333241 | A | 07 November 2017 | None | | | |
| WO | 2014126794 | A1 | 21 August 2014 | US | 2014228045 | A1 | 14 August 2014 |
| | | | | EP | 2957111 | A1 | 23 December 2015 |
| | | | | CA | 2900039 | A1 | 21 August 2014 |
| | | | | AU | 2014216588 | A1 | 20 August 2015 |

Form PCT/ISA/210 (patent family annex) (January 2015)

**REFERENCES CITED IN THE DESCRIPTION**

**Patent documents cited in the description**

- CN 2019107415709